# EUROPÄISCHE PATENTSCHRIFT

(11) **EP 1 522 374 B1**
(45) Veröffentlichungstag und Bekanntmachung des Hinweises auf die Patenterteilung: **24.07.2013**
(21) Anmeldenummer: 04021850.5
(22) Anmeldetag: 14.09.2004
(51) Int. Cl.: B23K 37/04, H01H 11/04

(54) **Bauteil-Transportvorrichtung**
element transporting device
Dispositif de transport d'éléments

(30) Priorität: 10.10.2003 DE 10347075
(43) Veröffentlichungstag der Anmeldung: 13.04.2005
(73) Patentinhaber: Otto Bihler Handels-Beteiligungs-GmbH, 87642 Halblech (DE)
(72) Erfinder: Bihler, Mathias, 87642 Halblech (DE); Köpf, Johann, 87642 Halblech (DE)
(74) Vertreter: Tiesmeyer, Johannes

(56) Entgegenhaltungen:
- EP-A- 0 426 267
- EP-A- 0 923 098
- DE-A- 2 041 454
- US-A- 2 798 935
- US-A- 3 510 045

## Beschreibung

Die vorliegende Erfindung betrifft eine Transportvorrichtung zum Transport eines Bauteils zu einer Bauteil-Abgabeposition sowie zur Abgabe des Bauteils dort, gemäß dem Oberbegriff des Anspruchs 1. Eine solche Transportvorrichtung ist in der US 3 510 045 offenbart. Die Transportvorrichtung weist hierzu eine Halteeinrichtung auf, welche während eines Bauteil-Transportvorgangs in einem Krafteinflussbereich eine Haltekraft auf das zu transportierende Bauteil ausübt und welche beweglich ist zwischen einer Halteeinrichtung-Aufnahmestellung, in der sie das Bauteil zum Transport aufnimmt, und einer Halteeinrichtung-Abgabestellung, in der sich das zu transportierende Bauteil in der Bauteil-Abgabeposition befindet.

Bevorzugt werden derartige Transportvorrichtungen zur Bestückung einer Fügestelle einer Fügeeinrichtung mit einem zu fügenden Bauteil (Fügeteil) eingesetzt. Dabei übernimmt die Transportvorrichtung aus einem Fügeteilspeicher ein Fügeteil und transportiert dieses zu einer nahe der Fügestelle liegenden Fügeteil-Abgabeposition. Besonders bevorzugt kommen derartige Transportvorrichtungen bei Schweißeinrichtungen zum Einsatz, bei welchen das Fügeteil an einer zwischen Schweißelektroden liegenden Fügestelle platziert werden muss.

Eine derartige Transportvorrichtung ist im Zusammenhang mit einer Schweißeinrichtung aus der DE 197 55 166 A1 der Anmelderin bekannt. Bei der bekannten Transportvorrichtung wird ein durch eine Schervorrichtung von einem Kontaktteilband abgelängtes Kontaktteil zwischen Greiferbacken einer Greifereinrichtung der Transportvorrichtung gegriffen. Daraufhin wird die Greifereinrichtung mit dem Kontaktteil durch eine kombinierte Verschiebe- und Schwenkbewegung von der Greifereinrichtung-Aufnahmestellung in eine Greifereinrichtung-Abgabestellung bewegt. In dieser Stellung befindet sich das Kontaktteil über einer Trägerplatte, auf die es aufgeschweißt werden soll. Die Trägerplatte selbst ruht auf einer ortsfesten Schweißelektrode. Eine der ortsfesten Elektrode gegenüberliegende bewegliche Schweißelektrode wird daraufhin auf die ortsfeste Elektrode zu bewegt, so dass das Kontaktteil zwischen Träger und beweglicher Elektrode eingeklemmt wird. Nach Erreichen der Klemmung zwischen Träger und Elektrode wird der Greifer aus dem Schweißspalt zurückgezogen, wobei das Kontaktteil unter Einwirkung der Klemmkraft von den Elektroden im Schweißspalt zurückbleibt. Der Schweißvorgang kann beginnen.

Mit der bekannten Transportvorrichtung können Bauteile einer bestimmten Größe sicher zur Bauteil-Abgabeposition transportiert und dort abgegeben werden. Die fortschreitende Miniaturisierung hat jedoch zu Bauteilen mit neu entwickelten Profilen geführt, welche, zwischen den Greiferbacken angeordnet, keinen Überstand in Dickenrichtung der Greiferbacken mehr besitzen, so dass eine sichere Abgabe des Bauteils an der Bauteil-Abgabeposition durch Aufbringen einer Klemmkraft orthogonal zur Haltekraft der Greiferbacken durch eine weitere Vorrichung nicht mehr ohne Weiteres möglich ist.

Eine beliebige Verringerung der Dicke der Greiferbacken unter die Abmessung des zu transportierenden Kontaktteils ist aus Gründen der Prozesssicherheit beim Transport nicht möglich. Die Greiferbacken benötigen eine Mindestdicke, um einerseits sicher Haltekraft auf das Kontaktteil ausüben und andererseits die Haltekraft auch gleichmäßig in das zu transportierende Kontaktteil einleiten zu können.

Darüber hinaus ist es wünschenswert, die Transportvorrichtung derart auszugestalten, dass ein von ihr transportiertes Bauteil an der Bauteil-Abgabeposition unabhängig von der Art und der konstruktiven Ausbildung einer der Transportvorrichtung nachfolgenden weiteren Vorrichtung sicher und wiederholbar abgegeben werden kann.

Es ist daher Aufgabe der vorliegenden Erfindung, eine Transportvorrichtung der eingangs genannten Art anzugeben, mit welcher selbst miniaturisierte Bauteile mit kleinsten Abmessungen unabhängig vom weiteren Prozessverlauf und den dafür bereitgestellten Vorrichtungen sicher zu einer Bauteil-Abgabeposition transportiert und dort abgegeben werden können.

Die genannte Aufgabe wird erfindungsgemäß dadurch gelöst, dass die Transportvorrichtung zum Lösen des Bauteils aus dem Krafteinflussbereich der Halteeinrichtung in der Halteeinrichtung-Abgabestellung eine von der Halteeinrichtung gesonderte Löseeinrichtung aufweist, wobei Halteeinrichtung und Löseeinrichtung derart relativ zueinander beweglich angeordnet sind, dass das Bauteil bezüglich der Halteeinrichtung durch eine Relativbewegung von Halteeinrichtung und Löseeinrichtung verlagerbar ist.

Mit Krafteinflussbereich ist der Bereich der Halteeinrichtung bezeichnet, in welchem eine Haltekraft auf das zu transportierende Bauteil ausgeübt wird. Dieser Krafteinflussbereich wird durch die Krafteinwirkungsmittel der Halteeinrichtung bestimmt, je nachdem, welches physikalische Prinzip zum Halten der Bauteile während des Transportvorgangs angewendet wird.

Durch die gesonderte Löseeinrichtung ist die Abgabe des Bauteils unabhängig von der Art und Ausgestaltung des Ortes bzw. der dort bereitgestellten weiteren Vorrichtung möglich. Daher kann die Halteeinrichtung entsprechend den Anforderungen an den Transport des Bauteils konstruktiv optimiert gestaltet sein.

Das Lösen erfolgt durch eine Relativbewegung von Halteeinrichtung und Löseeinrichtung. Durch diese Relativbewegung ist das Bauteil bezüglich der Halteeinrichtung verlagerbar, wodurch es sicher aus dem Krafteinflussbereich der Halteeinrichtung entfernt werden kann.

Die Aussage, dass die Halteeinrichtung während eines Bauteil-Transportvorgangs eine Haltekraft auf das zu transportierende Bauteil ausübt, schließt selbstverständlich nicht aus, dass die Halteeinrichtung auch über die Dauer der bloßen Transportbewegung hinaus, etwa während eines Verweilens in der Halteeinrichtung-Abgabestellung, eine Haltekraft auf das Bauteil ausübt.

Die Relativbewegung zwischen Halteeinrichtung und Löseeinrichtung kann in verschiedener Weise ausgestaltet sein. Beispielsweise kann das Bauteil beim Lösen durch eine Bewegung der Halteeinrichtung relativ zu einer ortsfest gehaltenen Löseeinrichtung in einer mit der Bauteil-Abgabeposition im Wesentlichen identischen Bauteil-Ablageposition angeordnet werden. In diesem Falle kann die Transportvorrichtung wie die aus der DE 197 55 166 A 1 bekannte Transportvorrichtung verwendet werden. Vorteilhaft an dieser Variante ist, dass das Bauteil sehr positionsgenau in seine Bauteil-Ablageposition gebracht werden kann.

Bei besonders schnell ablaufenden Prozessen ist es jedoch von Vorteil, wenn die Halteeinrichtung zur Vermeidung von Kollisionen sowie zur Verkürzung von Bewegungsstrecken nicht mehr in den Wirkbereich einer das Bauteil nachfolgend verarbeitenden weiteren Vorrichtung eingebracht werden muss. Dementsprechend kann die Transportvorrichtung vorteilhaft derart weitergebildet sein, dass das Bauteil durch die Relativbewegung zwischen Halteeinrichtung und Löseeinrichtung von der Bauteil-Abgabeposition zu einer von der Bauteil-Abgabeposition verschiedenen Bauteil-Ablageposition hin verlagerbar ist.

Ein wesentliches Kriterium zur Beurteilung einer Transportvorrichtung ist ihre Positioniergenauigkeit, d.h. wie positionsgenau das Bauteil in seiner endgültigen Bauteil-Ablageposition zur Anordnung kommt. Diese Positioniergenauigkeit kann dadurch verbessert sein, dass eine der Einrichtungen: Halteeinrichtung oder Löseeinrichtung, zur Relativbewegung bezüglich der jeweils anderen Einrichtung: Löseeinrichtung oder Halteeinrichtung, zumindest abschnittsweise an der jeweils anderen Einrichtung geführt ist. Vorzugsweise ist die eine Einrichtung an der jeweils anderen Einrichtung nahe des Krafteinflussbereichs der Halteeinrichtung geführt, da so Ablageungenauigkeiten aufgrund von Komponentendurchbiegungen in einem ungeführten Bereich der jeweiligen Einrichtung nahe dem gehaltenen Bauteil vermieden oder zumindest verringert werden können. Derartige Durchbiegungen können besonders bei Komponenten mit kleinen Abmessungen leicht auftreten.

Um die Positioniergenauigkeit weiter zu erhöhen, kann die Halteeinrichtung mit einer Positioniergeometrie versehen sein, welche die Halteeinrichtung zumindest in der Halteeinrichtung-Abgabestellung im Zusammenwirken mit einer gesonderten Positionierausbildung bezüglich einer Verlagerung in wenigstens einer Raumrichtung positioniert. Eine solche Positioniergeometrie kann jedoch nicht nur in der Halteeinrichtung-Abgabestellung sondern auch in der Halteeinrichtung-Aufnahmestellung mit einer Positionierausbildung zusammenwirken, so dass auch die Bauteil-Aufnahme durch eine bezüglich des aufzunehmenden Bauteils exakt positionierte Halteeinrichtung erleichtert ist.

Grundsätzlich kann die Positionierausbildung an der Transportvorrichtung selbst vorgesehen sein, etwa in Form eines Anschlags, welcher mit einer zur Positionierung geeigneten Gestalt ausgebildet ist. Dies gewährleistet zwar eine genaue Positionierung der Halteeinrichtung in ihrer Halteeinrichtung-Abgabestellung und vorzugsweise auch in der Halteeinrichtung-Aufnahmestellung, jedoch ist in einem solchen Fall eine genaue Justierung der Transportvorrichtung bzw. der dort vorgesehenen Positionierausbildung relativ zu einer unabhängig von der Transportvorrichtung vorgesehenen Bauteil-Ablageposition bzw. Bauteil-Aufnahmeposition nötig.

Häufig wird die Transportvorrichtung das Bauteil an eine weitere Vorrichtung abgeben bzw. es von einer weiteren Vorrichtung übernehmen. Der Positionierungsaufwand der Transportvorrichtung kann dann dadurch verringert sein, dass die Positionierausbildung an der weiteren Vorrichtung ausgebildet ist. Es reicht dann aus, die Positionierausbildung an der weiteren Vorrichtung, vorzugsweise etwa an einem das Bauteil weiter verarbeitenden Werkzeug, so auszubilden, dass bei Zusammenwirken von Positionierausbildung und Positioniergeometrie das Bauteil in die korrekte Bauteil-Abgabeposition gelangt. Eine grobe Justierung der Transportvorrichtung bezüglich der weiteren Vorrichtung ist in diesem Falle ausreichend.

Dieses Ziel kann gemäß einer vorteilhaften Weiterbildung der Erfindung konstruktiv besonders einfach erreicht werden, wenn die Positioniergeometrie an einer zur weiteren Vorrichtung hinweisenden Seite der Halteeinrichtung ausgebildet ist. Eine sehr genaue Positionierung der Halteeinrichtung bezüglich der weiteren Vorrichtung wird gewährleistet, wenn die Positioniergeometrie nahe des Krafteinflussbereichs der Halteeinrichtung ausgebildet ist. Ein besonders geeigneter Ort zur Ausbildung der Positioniergeometrie liegt zwischen dem Krafteinflussbereich und einer von der Bauteil-Abgabeposition verschiedenen Bauteil-Ablageposition.

Für eine einfache aber genaue Positionierung der Halteeinrichtung befindet sich erfindungsgemäß die Positioniergeometrie dann in Anlageeingriff mit einer Positionierausbildung, wenn sich die Halteeinrichtung in der Halteeinrichtung-Abgabestellung befindet. Entsprechendes kann zur einfachen Aufnahme des Bauteils auch für die Halteeinrichtung-Aufnahmestellung gelten.

Die Halteeinrichtung kann bezüglich einer Verlagerung in einer Raumrichtung konstruktiv besonders einfach positionsgenau angeordnet werden, wenn die Positioniergeometrie wenigstens zwei im wesentlichen ebene Anlageflächen aufweist, welche um eine in der Ebene der Anlageflächen liegende Neigeachse um einen vorbestimmten Winkel zueinander geneigt vorgesehen sind. Sollte eine genaue Positionierung der Halteeinrichtung in zwei zueinander orthogonalen Raumrichtungen gewünscht sein, kann die Positioniergeometrie gemäß einer vorteilhaften Weiterbildung wenigstens zwei weitere im wesentlichen ebene Anlageflächen aufweisen, welche um eine in der Ebene der Anlageflächen liegende weitere Neigeachse um einen vorbestimmten Winkel zueinander geneigt orientiert sind, wobei die Neigeachse und die weitere Neigeachse im Wesentlichen orthogonal zueinander liegen. Die Neigeachsen liegen zur Erreichung einer guten Sicherungswirkung gegen eine Verlagerung vorteilhaft im Wesentlichen orthogonal- zu der jeweils durch die ihnen zugeordneten Anlageflächen fixierte gesicherte Raumrichtung.

Wie eingangs angedeutet wurde, kann die Halteeinrichtung beliebige physikalische Effekte nutzen, um die zu transportierenden Bauteile sicher zu halten. Die Halteeinrichtung kann das zu transportierende Bauteil beispielsweise durch Adhäsion, durch Magnetkraft, durch Schalldruck oder dergleichen halten. Besonders sicher und daher bevorzugt ist die Halteeinrichtung jedoch eine mechanische Halteeinrichtung, welche einen Greiferabschnitt mit wenigstens zwei einander mit Abstand gegenüberliegenden Klauen umfasst, die in einem zwischen sich gebildeten Klauenmaul den Krafteinflussbereich der Halteeinrichtung definieren.

Zur leichteren Aufnahme und Abgabe eines Bauteils können die Klauen bevorzugt in Richtung ihres Abstands voneinander federnd an der Halteeinrichtung angeordnet sein. Da eine bevorzugte Ausführungsform der Erfindung zum Transport miniaturisierter Bauteile vorgesehen ist, weist auch der Greiferabschnitt selbst nur kleine Abmessungen auf. Bei derartigen Greiferabschnitten kann die federnde Anordnung ohne jeglichen Montageaufwand bevorzugt durch die Klauengeometrie selbst bewirkt sein. Dies ist insbesondere dann möglich, wenn wenigstens eine Klaue, bevorzugt jedoch alle Klauen, in der Richtung von einer Öffnung des Klauenmauls weg einen sich zumindest abschnittsweise verjüngenden Klauenquerschnitt aufweist. Dieser sich verjüngende Querschnittsabschnitt bildet eine Hooke'sche Feder und definiert einen Drehbereich, um den herum sich die wenigstens eine Klaue in einer das Klauenmaul vergrößernden oder verkleinernden Richtung federn kann.

Um das Bauteil sicher halten und eine ausreichende Haltekraft darauf ausüben zu können, kann der Abstand zwischen den wenigstens zwei Klauen im unbelasteten Zustand des Greiferabschnitts zumindest in einem Abschnitt des Klauenmauls geringer bemessen sein als die Breite eines in diesem Klauenmaulabschnitt zu greifenden Bauteilabschnitts.

Bei einer bevorzugten Ausführungsform kann die Positioniergeometrie ohne nennenswerten Bearbeitungsaufwand an der Öffnung des Klauenmauls vorgesehen sein. Gemäß einer Weiterbildung der vorliegenden Erfindung kann der Abstand der Klauen voneinander dann, wenn die Positioniergeometrie sich im Anlageeingriff mit der Positionierausbildung befindet, größer sein als im unbelasteten Zustand des Greiferabschnitts. Dadurch wird in der Halteeinrichtung-Abgabestellung die aufgrund der Federkraft der Klauen auf das Bauteil einwirkende Haltekraft verringert, was ein Lösen des Bauteils aus der Halteeinrichtung erleichtert. Gleiches kann auch für ein Zusammenwirken von Positioniergeometrie und Positionierausbildung in der Halteeinrichtung-Aufnahmestellung der Halteeinrichtung gelten. Hier kann durch eine Spreizung der Klauen eine Aufnahme des Bauteils erleichtert werden, etwa indem eine geringere Kraft zum Einschieben des Bauteils in das Klauenmaul benötigt wird.

Erfindungsgemäß kann die Löseeinrichtung einen Schieber umfassen, welcher relativ zur Halteeinrichtung zwischen einer vorgeschobenen und einer zurückgezogenen Stellung beweglich ist. Dieser Schieber, welcher je nach Ausgestaltung der Löseeinrichtung ein drehbeweglicher oder/und ein linear beweglicher Schieber sein kann, stellt ein einfaches Bauelement dar, welches ein Lösen durch Ausschieben des Bauteils aus dem Krafteinflussbereich der Halteeinrichtung gewährleistet. Dabei ist die Bezeichnung "Schieber" kein Präjudiz dafür, dass der Schieber die bewegte Komponente bildet, während die Halteeinrichtung während des Lösevorgangs bezüglich eines Gestells der Transportvorrichtung ortsfest ist. Die Bezeichnung "Schieber" stellt lediglich auf die Funktion des Ausschiebens des Bauteils aus der Halteeinrichtung ab.

Grundsätzlich kann der Schieber beliebig zwischen seinen beiden Stellungen beweglich sein. Die Löseeinrichtung kann jedoch dadurch wesentlich vereinfacht sein, dass der Schieber durch Krafteinwirkung in die zurückgezogene Stellung vorgespannt ist. Die Vorspannkraft kann von einem beliebigen Kraftgerät stammen, im einfachsten und kostengünstigsten Fall wird sie durch ein Federelement bereitgestellt.

Zum sicheren Lösen des Bauteils von der Halteeinrichtung kann der Schieber derart vorgesehen sein, dass er sich in seiner vorgeschobenen Stellung in den Krafteinflussbereich der Halteeinrichtung hinein erstreckt. Vorzugsweise durchsetzt der Schieber sogar den Krafteinflussbereich, so dass er bei seiner Bewegung von der zurückgezogenen in die vorgeschobene Stellung das Bauteil zwangsweise verdrängt und somit aus der Halteeinrichtung löst.

Eine sichere Ablage des Bauteils kann dadurch gewährleistet werden, dass der Schieber relativ zur Halteeinrichtung im Wesentlichen in Erstreckungsrichtung des Klauenmauls beweglich angeordnet ist. Diese Weiterbildung der Erfindung gewährleistet, dass die von der Halteeinrichtung auf das Bauteil ausgeübte Haltekraft während des Ausschiebens des Bauteils wirksam bleibt und somit das Bauteil während des Lösens führen kann.

Eine für einen Transport miniaturisierter Bauteile vorteilhafte Unterbringung von Halte- und Löseeinrichtung in geringem Bauraum kann dadurch erreicht werden, dass der Schieber in einem in der Halteeinrichtung ausgebildeten Führungskanal geführt ist. Eine einfache aber sichere Führung in diesem Führungskanal auch über eine lange Bewegungsstrecke kann dadurch einfach realisiert sein, dass der Schieber als im Wesentlichen zylindrischer Schubstab ausgebildet ist. Diese vorteilhafte Weiterbildung der Erfindung erhöht durch die Führungswirkung die Positioniergenauigkeit.

Zum leichteren Aufbau der Transportvorrichtung sowie zum Schutz der unter Umständen filigranen Halte- und Löseeinrichtung kann die Transportvorrichtung eine vormontierte oder vormontierbare Transportbaugruppe umfassen, an welcher die Löseeinrichtung zur gemeinsamen Bauteil-Transportbewegung mit der Halteeinrichtung zwischen der Halteeinrichtung-Aufnahmestellung und der Halteeinrichtung-Abgabestellung vorgesehen ist.

Da die erfindungsgemäße Transportvorrichtung das Fügen von Fügeteilen mit sehr kleiner Abmessung ermöglicht, verleiht eine erfindungsgemäße Transportvorrichtung einer Schweißvorrichtung einen eigenen Wert. Aus diesem Grunde betrifft die vorliegende Erfindung auch eine Schweißvorrichtung mit einer Transportvorrichtung, welche eines oder mehrere der oben genannten Merkmale aufweist.

Bei einer solchen Schweißvorrichtung ist es vorteilhaft, die oben erwähnte Positionierausbildung an einer der Schweißelektroden vorzusehen. Dadurch wird sichergestellt, dass die Halteeinrichtung zu der Schweißelektrode optimal positioniert ist, ohne die Halteeinrichtung mit hoher Genauigkeit justieren zu müssen.

In einem einfachen Fall kann die Schweißelektrode gemäß einer vorteilhaften Weiterbildung der Erfindung als Positionierausbildung an ihrer Außenumfangsfläche wenigsten zwei, vorzugsweise im wesentlichen ebene, Gegen-Flächenbereiche aufweisen, welche zueinander um eine in der Ebene der Gegen-Flächenbereiche liegende Neigeachse um einen vorbestimmten Winkel geneigt angeordnet sind. In diesem Falle kann die Positionierausbildung an der Schweißelektrode mit den wenigstens zwei Anlageflächen der Positioniergeometrie der Halteeinrichtung zusammenwirken. Überdies stört die Positionierausbildung an der Außenumfangsfläche der Elektrode den Schweißbetrieb der Schweißelektrode nicht.

Weiterhin kann die Außenumfangsfläche der Schweißelektrode, etwa zur Anpassung an unterschiedliche Positioniergeometrien, eine Mehrzahl aneinander angrenzender solcher Gegen-Flächenbereiche aufweisen. Vorzugsweise sind die Gegen-Flächenbereiche um zueinander parallele Neigungsachsen geneigt, wobei wenigstens zwei der ebenen Gegen-Flächenbereiche parallel zueinander in einem Abstand einer Schlüsselweite vorgesehen sind. Dadurch kann die Positionierausbildung gleichzeitig als Schlüsselangriffsbereich genutzt werden. Die Schweißelektrode kann dann durch Schlüsselangriff an den Gegen-Flächenbereichen in eine Elektrodenhalterung eingeschraubt, winkeljustiert und betriebsbereit gemacht werden. Im betriebsbereiten Zustand dienen dann die Gegen-Flächenbereiche als Positionierausbildung.

Die Positioniergenauigkeit des Fügeteils an der Fügeteil-Ablageposition ist ein maßgebender, die Qualität der Schweißvorrichtung bestimmender Faktor. Diese Positioniergenauigkeit kann auch bei oder nach der Abgabe des Fügeteils von der Transportvorrichtung an die Schweißstelle dadurch erhöht sein, dass die Schweißelektrode in einer zur Schweißstelle hinweisenden Elektrodenwirkfläche eine Fügeteil-Ausnehmung zur Aufnahme eines Fügeteils aufweist. Die Fügeteil-Ausnehmung kann beispielsweise als wenigstens eine vom Außenumfangsrand der Elektrode weg verlaufende Vertiefung in der Elektrodenwirkfläche ausgebildet sein. Eine derartige Vertiefung bewirkt, dass das Fügeteil auch nach einer Abgabe durch die Transportvorrichtung durch die wenigstens eine bewegliche Elektrode exakt angeordnet werden kann. Besonders bevorzugt ist für eine sehr hohe Positioniergenauigkeit die Fügeteil-Ausnehmung in ihrer Querschnittskontur an die Kontur eines Mantelabschnitts des Fügeteils angepasst, welcher an der Wandung der Fügeteil-Ausnehmung zur Anlage kommt.

Als Elektrodenwirkfläche ist dabei die Fläche der Schweißelektrode bezeichnet, durch welche der Schweißstrom zwischen den Elektroden über das Fügeteil übertragen wird.

Eine wirtschaftliche Möglichkeit der Mehrfachnutzung einer Schweißelektrode kann dadurch erhalten werden, dass die Schweißelektrode eine Elektrodenachse und eine Mehrzahl von Fügeteil-Ausnehmungen aufweist, welche vom Außenumfangsrand der Elektrode unter Annäherung an die Elektrodenachse nach innen verlaufen. Es befindet sich dann eine der Fügeteil-Ausnehmungen in einer schweißaktiven Stellung, während sich die anderen Fügeteil-Ausnehmungen in einer schweißinaktiven Stellung befinden. Durch Drehen der Schweißelektrode um die Elektrodenachse kann die jeweils aktive Fügeteil-Ausnehmung in eine schweißinaktive Stellung und eine andere, bisher inaktive Fügeteil-Ausnehmung, in eine schweißaktive Stellung gebracht werden. Die Drehung der Elektrode kann besonders vorteilhaft mittels Schlüsselangriff an den ebenen Flächenbereichen erfolgen.

Bei Schweißvorrichtungen, welche mit besonders hoher Taktzahl arbeiten, kann es vorkommen, dass das Lösen des Fügeteils aus der Halteeinrichtung schlagartig geschieht, so dass das Fügeteil gleichsam in die Bauteil-Ablageposition "eingeschossen" wird. Dabei kann bei derart hohen Betriebsgeschwindigkeiten das Fügeteil immer noch genau positioniert werden, wenn die Schweißelektrode ein Anschlagmittel aufweist, welches die wenigstens eine Fügeteil-Ausnehmung in ihrer Verlaufsrichtung vom Außenumfangsrand weg begrenzt. Das Anschlagmittel kann ein ausnehmungsfreier Bereich der Elektrodenwirkfläche sein, d.h. ein einstückig mit der Elektrodenwirkfläche zusammenhängender Bereich. Bevorzugt ist das Anschlagmittel jedoch ein in einer Öffnung in der Elektrodenwirkfläche angeordneter Anschlagblock. Dies bietet die Möglichkeit eines Austauschs im Reparaturfall.

Um den Fluss des Schweißstroms über das Fügeteil durch den Schweißspalt nicht nachteilig zu beeinflussen, reicht die zur Schweißstelle hinweisende Stirnfläche des Anschlagblocks gemäß einer Weiterbildung der vorliegenden Erfindung zur Schweißstelle hin nicht über die Elektrodenwirkfläche hinaus. Bevorzugt ist sie mit dieser bündig.

Eine gemäß der obigen Beschreibung gestaltete Schweißelektrode, welche in besonderer Weise für ein Zusammenwirken mit der erfindungsgemäßen Transportvorrichtung ausgebildet ist, besitzt einen eigenen erfinderischen Wert, so dass für gesonderten Schutz der Schweißelektrode nachgesucht wird.

Eine mit der erfindungsgemäßen Transportvorrichtung zusammenwirkende Schweißvorrichtung kann zur Veränderung der Schweißspaltweite eines Schweißspalts, welchen wenigstens zwei einander im Wesentlichen gegenüberliegende Schweißelektroden zwischen sich definieren, eine Kraftquelle und einen die Kraft der Kraftquelle übertragenden Kraftübertragungsmechanismus aufweisen. Von den Schweißelektroden ist wenigstens eine Elektrode durch eine von der Kraftquelle bereitgestellte und mittels des Kraftübertragungsmechanismus zu ihr übertragene Kraft in Richtung auf die andere Elektrode zu und von dieser weg bewegbar.

Auch eine solche Schweißvorrichtung ist in der DE 197 55 166 A1 offenbart. Die dort gezeigte Schweißvorrichtung weist als Kraftquelle einen um eine Welle drehenden Exzenternocken und als Kraftübertragungsmechanismus eine als Schweißspalt-Schließfeder verwendete Druckfeder auf. Die Schließfeder ist an ihrem einen Ende an einem an der Exzenternocken-Mantelfläche anliegenden Stößel und an ihrem anderen Ende an einem um eine Drehachse schwenkbaren Schweißelektrodenarm abgestützt. An dem Schweißelektrodenarm greift überdies eine als Schweißspalt-Öffnungsfeder verwendete weitere Druckfeder an, welche den Schweißelektrodenarm bei unbelasteter oder gering belasteter Schließfeder in eine in Richtung einer Vergrößerung der Schweißspaltweite weisende Öffnungsrichtung vorspannt.

Nachteilig an dieser Konstruktion ist, dass der Exzenterhub unmittelbar auf den Schweißelektrodenarm und damit auf die starr mit diesem verbundene, bewegliche Schweißelektrode übertragen wird. Dies führt für Fügeteile mit einer bestimmten Mindest-Baugröße zu zufriedenstellenden Ergebnissen. Mit fortschreitender Miniaturisierung werden die Fügeteile gegen äußere Einflüsse immer empfindlicher. Der an der Schweißstelle herrschende Bewegungsablauf der beweglichen Schweißelektrode wird dann den Anforderungen des miniaturisierten Fügeteils aufgrund möglicher auftretender Schläge und Stöße nicht mehr gerecht.

Ein weiterer kritischer Punkt der Schweißvorrichtung des Standes der Technik ist der Einfluss der Reibung auf die Bewegung des Schweißelektrodenarms, insbesondere bei Bewegungen mit kleinem Hub, wie sie etwa Setzbewegungen des Schweißelektrodenarms beim Abschmelzen von Schweißwarzen an einem der Fügeteile oder an beiden Fügeteilen darstellen.

Es ist daher eine Schweißvorrichtung wünschenswert, bei welcher der Bewegungsablauf der Schweißelektroden bei einer Schweißspaltverringerung unter möglichst geringer mechanischer Belastung des Fügeteils erfolgt, insbesondere in einer Phase, in welcher ein Berührkontakt zwischen der Elektrode und dem Fügeteil hergestellt wird. Dabei ist vor allem die erhöhte Empfindlichkeit miniaturisierter Fügeteile gegenüber mechanischen Belastungen zu berücksichtigen.

Ein günstiger Bewegungsablaufs der Schweißelektroden bei einer Veränderung der Schweißspaltweite erfolgt gemäß einer Weiterbildung der vorliegenden Erfindung dadurch, dass die Schweißvorrichtung wenigstens einen Hebelmechanismus als den Kraftübertragungsmechanismus umfasst, wobei der Hebelmechanismus ein erstes Lenkersystem aufweist, welches an einem bezüglich ruhender Teile der Schweißvorrichtung fixen Anlenkort um eine Gestell-Drehachse drehbar ist, und wobei der Hebelmechanismus weiterhin ein zweites Lenkersystem aufweist, welches an einem ersten Anlenkort an dem ersten Lenkersystem um eine erste Drehachse drehbar angelenkt und an einem zweiten Anlenkort um eine zweite Drehachse drehbar mit der beweglichen Elektrode verbunden ist.

Bei dem oben beschriebenen Hebelmechanismus ist nicht ausgeschlossen, dass neben den erwähnten Anlenkorten weitere Anlenkorte vorhanden sind. Vielmehr ist die Beschreibung des Hebelmechanismus derart zu verstehen, dass mindestens die erwähnten Anlenkorte vorhanden sein sollen.

Weiterhin bedeutet "mit der beweglichen Elektrode verbunden" nicht notwendigerweise eine unmittelbare Anlenkung an der beweglichen Elektrode. Die drehbare Verbindung kann auch über ein mit der beweglichen Elektrode verbundenes Bewegung übertragendes Vorrichtungsteil realisiert sein.

Durch die obige Anordnung der Lenkersysteme kann erreicht werden, dass eine Drehbewegung des ersten Anlenkorts um einen Winkelbetrag um den fixen Anlenkort herum in eine Bewegung des zweiten Anlenkorts mit einer sehr kleinen Bewegungskomponente in Elektrodenschließ- und -öffnungsrichtung untersetzt wird. Schläge und Stöße auf ein an der Fügestelle angeordnetes Fügeteil können dadurch vermieden werden. Das tatsächliche Untersetzungsverhältnis ändert sich dabei in Abhängigkeit von der Position des ersten Anlenkortes. Die Bewegungsuntersetzung führt zu einer entsprechenden Kraftübersetzung, so dass Reibungswiderstände, die einer Bewegung des Schweißelektrodenarms entgegenstehen würden, sicher überwunden werden.

Mit Schweißbereitschaftsstellung ist dabei eine Stellung der Elektroden bezeichnet, bei welcher durch Berührkontakt zwischen leitenden Teilen im Schweißspalt aus technischer Sicht ein Schweißvorgang erfolgen kann, d. h. eine Stellung, bei welcher zwischen den Elektroden ein Schweißstrom durch das Fügeteil hindurch fließen kann.

Darüber hinaus ist durch geschickte Wahl der Abmessungen der einzelnen Lenkersysteme eine gezielte und reproduzierbare Annäherungsbewegung der Elektroden aufeinander zu im Submillimeterbereich ohne weiteres verwirklichbar.

In einer konstruktiv besonders einfachen Ausführungsform ist der Hebelmechanismus ein Kniehebelmechanismus, bei welchem die Gestell-Drehachse, die erste und die zweite Drehachse jeweils paarweise im Wesentlichen parallel zueinander liegen. Die im Wesentlichen parallele Anordnung der Drehachsen zueinander sorgt für leicht berechenbare Übersetzungsverhältnisse sowie für einen geringeren Betriebsverschleiß und somit für eine lange Lebensdauer und einen reibungsarmen Betrieb der Schweißvorrichtung.

Grundsätzlich kann im einfachsten Fall das zweite Lenkersystem lediglich aus einem einzigen Lenker bestehen. Vorzugsweise umfasst das zweite Lenkersystem jedoch eine Mehrzahl von Lenkern, welche im Wesentlichen eine gemeinsame erste und eine gemeinsame zweite Drehachse aufweisen und in Richtung der zweiten Drehachse mit Abstand voneinander angeordnet sind. Durch die Mehrzahl von Lenkersystemen wird zum einen eine Redundanz erreicht, so dass die Schweißvorrichtung auch beim unwahrscheinlichen Fall eines Bruchs eines Lenkers zumindest notbetriebsfähig bleibt. Darüber hinaus gestattet diese Ausführungsform eine günstige symmetrische Kraft- und Bewegungseinleitung und schafft die Voraussetzung für eine spielfreie Verlagerung der beweglichen Schweißelektrode.

Ebenso wie das zweite Lenkersystem kann demzufolge auch das erste Lenkersystem eine Mehrzahl von Lenkern umfassen, welche im Wesentlichen eine gemeinsame Gestell-Drehachse aufweisen und in Richtung der Gestell-Drehachse mit Abstand voneinander angeordnet sind. Um den Bearbeitungsaufwand in Grenzen zu halten, umfasst das zweite wie das erste Lenkersystem jeweils vorzugsweise zwei Lenker.

Bei den hier diskutierten Fügeteilen handelt es sich um Bauteile mit Dickenabmessungen im Bereich von Hundertstel- oder Zehntel-Millimetern. Eine für eine genaue Positionierung hilfreiche möglichst spielfreie Bewegung der beweglichen Schweißelektrode auf die jeweils andere Elektrode zu oder von dieser weg kann durch Ausbildung des zweites Anlenkortes derart erreicht werden, dass vom zweiten Lenkersystem zur Elektrode hin eine in Bewegungsrichtung der Elektrode verlaufende Kraft und, zumindest zeitweise, darüber hinaus in Richtung der zweiten Drehachse verlaufende, einander entgegengesetzte Kräfte übertragbar sind.

Konstruktiv können die einander entgegengesetzten Kräfte in sehr einfacher Art und Weise dadurch hervorgerufen werden, dass der zweite Anlenkort derart ausgebildet ist, dass auf einer Seite: lenkersystemseitig oder elektrodenseitig, ein Vorsprung mit konischer Mantelfläche vorgesehen ist, welche mit einer entsprechend geneigten, vorzugsweise einer komplementär-konischen Begrenzungsfläche einer auf der jeweils anderen Seite vorgesehenen Kopplungs-Ausnehmung zumindest zeitweise in Anlageeingriff steht. Die einander entgegengesetzten Kräfte bewirken eine Verspannung der wenigstens einen beweglichen Elektrode bezüglich des zweiten Lenkersystems, so dass sie im Wesentlichen frei von Seitenabweichungen in der Bewegungsrichtung verlagerbar ist. Je länger dieser Verspannungszustand während einer Verlagerung der beweglichen Elektrode aufrechterhalten werden kann, desto günstiger ist es im Hinblick auf die erzielte Schweißverbindung. Die so verspannte Schweißelektrode kann aufgrund der dadurch im Wesentlichen vermiedenen Seitenabweichungen mit großer Genauigkeit an der Fügestelle angeordnet werden, was wiederum zu einer verbesserten Maßgenauigkeit des Schweißergebnisses führt.

Es ist bekannt, dass Kniegelenkhebel mit zunehmender Bewegungsuntersetzung eine in gleichem Maße ansteigende Kraftübersetzung erreichen. Um das an der Fügestelle angeordnete Fügeteil vor einer Beschädigung oder gar einer Zerstörung durch die auftretenden sehr hohen Kräfte an der Elektrodenwirkfläche zu schützen, kann die Kopplungs-Ausnehmung als Langloch ausgebildet und derart angeordnet sein, dass die Längsrichtung des Langlochs bei einer schweißbereiten Elektrodenstellung im Wesentlichen in Bewegungsrichtung der beweglichen Elektrode verläuft. Bei einer solchen Anordnung ermöglicht das Langloch in der schweißbereiten Elektrodenstellung, d.h. bei Aufliegen der Elektrodenwirkfläche auf dem Fügeteil, dass keine Druckkräfte mehr von dem Hebelsystem auf die Elektrode und damit auf das Fügeteil einwirken.

Darüber hinaus gestattet ein derart ausgebildetes Langloch ein reibungsarmes Setzen der wenigstens einen beweglichen Elektrode während des Schweißens, etwa bewirkt durch ein Abschmelzen von eigens am Bauteil oder am Trägerobjekt vorgesehenen Schweißwarzen.

Die wenigstens eine bewegliche Schweißelektrode kann gemäß einer Weiterbildung der Erfindung linear verschieblich an der Schweißvorrichtung angeordnet sein. Sie kann jedoch auch in der aus dem Stand der Technik bewährten Art und Weise an einer Drehlagerstelle um eine Elektroden-Drehachse drehbar gelagert sein, wobei sie durch einen Schweißelektrodenarm mit der Drehlagerstelle verbunden ist. Durch den Schweißelektrodenarm wird bei ausreichender Schweißelektrodenarmlänge und lediglich geringer Änderung des Schweißspalts eine quasi-lineare Verlagerung der beweglichen Elektrode erreicht, ohne dass eine komplizierte lineare Führung erforderlich ist. Bei dieser Anordnung der beweglichen Elektrode an einem Schweißelektrodenarm ist es für einen reibungsarmen Betrieb besonders günstig, wenn die zweite Drehachse, vorzugsweise auch die erste Drehachse und die Gestell-Drehachse, zur Elektroden-Drehachse im Wesentlichen parallel ist.

Möglicherweise bestehen Schwierigkeiten, den Schweißelektrodenarm derart anzuordnen, dass er andere Vorrichtungsteile der Schweißvorrichtung, insbesondere die Transportvorrichtung, nicht stört. Eine zur Kollisionsvermeidung in Richtung der Elektroden-Drehachse versetzte Anordnung des Schweißelektrodenarms kann unter Umständen zu einer unerwünschten Verwindung des Schweißelektrodenarms um die Längsachse des Schweißelektrodenarms erfolgen. Diese Verwindung kann verhindert werden, wenn der Schweißelektrodenarm zwei in Richtung der Elektroden-Drehachse mit Abstand voneinander angeordnete Träger aufweist. Wichtige Schweißvorrichtungsteile, mit denen eine Kollision vermieden werden soll, können dabei gemäß einer Weiterbildung der Erfindung zwischen den beiden Trägern vorgesehen sein. Aus Gründen symmetriescher Kraft- und Bewegungseinleitung sind die Träger bezüglich der mit ihr verbundenen beweglichen Schweißelektrode vorzugsweise symmetrisch angeordnet. Um eine Relativbewegung der beiden Träger zueinander zu vermeiden, können erfindungsgemäß beide Träger mit einer gemeinsamen Drehwelle drehfest verbunden sein.

Eine für eine positionsgenaue Verlagerung der Schweißelektrode besonders günstige, möglichst symmetrische Krafteinleitung in die Träger kann weiterhin dadurch erfolgen, dass je ein Lenker des zweiten Lenkersystems an je einem Träger um die zweite Drehachse drehbar angelenkt ist.

Die Kraftquelle der Schweißvorrichtung kann gemäß einer vorteilhaften Alternative der vorliegenden Erfindung eine doppelt wirkende Kraftquelle sein, so dass mit ihr die Schweißelektroden aufeinander zu und voneinander wegbewegt werden können. Häufig sind die hier beschriebenen Schweißvorrichtungen jedoch Teil einer größeren Anlage, welche getaktet arbeitet, wobei der Takt von Exzenternocken als Kraftquellen vorgegeben wird. Durch Derartige Nocken können ohne unerwünschte komplizierte Maßnahmen, wie etwa das Vorsehen von Eingriffsnuten, nur Kräfte in einer Richtung übertragen werden. In einem solchen Falle ist es günstig, wenn die Schweißvorrichtung ein Kraftelement aufweist, welches die bewegliche Elektrode in einer Richtung: Schweißspaltweitenvergrößerung oder Schweißspaltweitenverkleinerung, mit Kraft beaufschlagt, um die nötige Kraft für eine Veränderung der Schweißspaltweite in dieser Richtung bereitzustellen. Um gegen die Beaufschlagung durch das Kraftelement eine Veränderung der Schweißspaltweite in der jeweils entgegengesetzten Richtung erreichen zu können, ist das Kraftelement durch die Kraftquelle überwindbar.

Da eine mit der Bewegungsuntersetzung des Hebelmechanismus einhergehende Kraftübersetzung nicht genutzt werden soll, kann die Kraftquelle grundsätzlich auch am zweiten Lenkersystem zur Kraft- und Bewegungseinleitung angreifen. Aus Gründen der einfacheren Anordnung der Kraftquelle an der Schweißvorrichtung sind jedoch eine Kraft- und Bewegungseinleitung durch die Kraftquelle in das erste Lenkersystem bevorzugt. Um sämtliche die Spaltweite verändernden Kraftangriffe möglichst nahe beieinander vorzusehen, was auch im Hinblick auf eine Auslegung des Systems vorteilhaft ist, kann das Kraftelement ebenfalls an einem der Lenkersysteme, aufgrund der günstigeren Bewegungsverhältnisse vorzugsweise am ersten Lenkersystem, kraftübertragend angreifen.

Eine günstige räumliche Trennung von Kraft- bzw. Bewegungseinleitung in das erste Lenkersystem und Kraft- bzw. Bewegungsableitung vom ersten in das zweite Lenkersystem kann gemäß einer Weiterbildung der Erfindung erreicht werden, wenn das erste Lenkersystem wenigstens einen Winkellenker mit zwei einen vorbestimmten Winkel einschließenden Schenkeln umfasst, wobei der eine Schenkel einen Krafteinleitungsbereich zur Einleitung von Kraft der Kraftquelle sowie einen Angriffsort des Kraftelements aufweist und wobei am zweiten Schenkel der erste Anlenkort zur Anlenkung des zweiten Lenkersystems ausgebildet ist.

Da bei Vorsehen eines wie oben definierten Langlochs im schweißbereiten Zustand der Elektroden keine Kraft vom Hebelmechanismus auf die Elektrode übertragen werden kann, ist es zur Sicherstellung einer definierten Andruckkraft der Elektrode an das Fügeteil vorteilhaft, wenn auf die bewegliche Elektrode, vorzugsweise auf einen mit ihr verbundenen Schweißelektrodenarm, zumindest in der Schweißbereitschaftsstellung eine in Richtung einer Schweißspaltverringerung wirkende Kraft einwirkt. Im einfachsten Fall kann diese Kraft die auf die Elektrode wirkende Schwerkraft sein. Hierzu reicht es aus, die wenigstens eine bewegliche Elektrode derart anzuordnen, dass ihre Schwerkraft in Richtung einer Schweißspaltverkleinerung wirkt. Eine größere konstruktive Gestaltungsfreiheit erreicht man jedoch dann, wenn die Schweißvorrichtung ein Kraftgerät umfasst, welche eine in Richtung der Schweißspaltverkleinerung wirkende Kraft auf die bewegliche Elektrode, vorzugsweise auf den Schweißelektrodenarm, ausübt. In diesem Falle ist eine beliebig orientierte Anordnung der Elektrode möglich.

Die vorliegende Erfindung wird im Folgenden anhand der beiliegenden Figuren näher erläutert werden. Es stellt dar:
- Fig. 1: eine Querschnittsansicht einer Schweißvorrichtung mit einer erfindungsgemäßen Transportvorrichtung sowie einem Hebelmechanismus zum definierten Heben und Senken einer beweglichen Schweißelektrode,
- Fig. 2: einen die Transportvorrichtung und den Hebelmechanismus umfassenden vergrößerten Ausschnitt von Fig. 1,
- Fig. 3a: eine schematische Unteransicht eines Greiferabschnitts der erfindungsgemäßen Transportvorrichtung, anliegend an einer Schweißelektrode, mit zwischen Greiferklauen gehaltenem Bauteil,
- Fig. 3b: die Unteransicht von Fig. 3a mit dem Bauteil in der Bauteil-Ablageposition,
- Fig. 4a: eine schematische Seiten-Schnittansicht einer Baugruppe mit Halte- und Löseeinrichtung entsprechend der Stellung von Fig. 3a,
- Fig. 4b: die Unteransicht von Fig. 4a mit dem Bauteil in der Bauteil-Ablageposition,
- Fig. 5: eine Schnittansicht entlang der Linie V-V in Fig. 2,
- Fig. 6: eine Schnittansicht entlang Linie VI-VI von Fig. 2,
- Fig. 7a - 7d: eine schematische Darstellung unterschiedlicher Stellungen der Schweißelektroden, des Hebelmechanismus und der mit diesem verbundenen Bauteile während einer Schließbewegung der beweglichen Schweißelektrode.

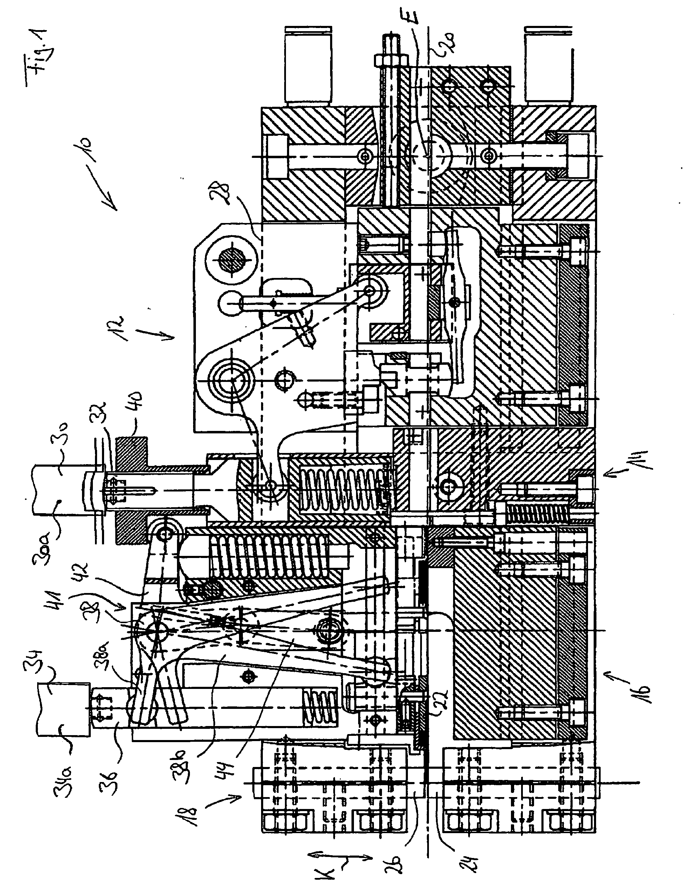

In Fig. 1 ist eine Schweißanlage allgemein mit 10 bezeichnet. Die Schweißanlage 10 umfasst eine Kontaktband-Vorschubeinheit 12, eine Kontaktteil-Abtrenneinheit 14, eine Transportvorrichtung 16 sowie eine Schweißvorrichtung 18.

Ein in Fig. 1 lediglich durch Strichlinierung angedeutetes Kontaktband 20 läuft in der Zeichenebene der Fig. 1 von der Kontaktband-Vorschubeinheit 12 getaktet angetrieben zur Kontaktteil-Abtrenneinheit 14. In der Kontaktteil-Abtrenneinheit 14 werden durch Abscheren vom Kontaktband Kontaktteile definierter Länge abgetrennt. Diese Kontaktteile werden in der Transportvorrichtung 16 von einer Baugruppe 22 umfassend eine Halteund eine Löseeinrichtung in einer Halteeinrichtung-Aufnahmestellung aufgenommen und zu einer Halteeinrichtung-Abgabestellung transportiert.

Die Schweißvorrichtung 18 umfasst eine bezüglich eines Vorrichtungsgestells der Schweißvorrichtung ortsfeste untere Schweißelektrode 24 und eine um eine Elektroden-Drehachse E drehbare bewegliche Schweißelektrode 26. Die bewegliche Schweißelektrode 26 ist über einen Schweißelektrodenarm 28 mit der Drehlagerung um die Elektroden-Drehachse E verbunden und in Richtung des Doppelpfeils K auf die Elektrode 24 zu und von dieser weg bewegbar. Der Schweißelektrodenarm 28 ist nur abschnittsweise, zum Teil durch Strichlinierung, dargestellt.

Der Takt für die Kontaktband-Vorschubeinheit 12 sowie für das Heben und Senken der beweglichen Schweißelektrode 26 wird über einen angedeuteten ersten Exzenternocken 30 auf einen durch Federkraft an der Exzenternocken-Mantelfläche 30a anliegenden ersten Stößel 32 übertragen.

Ebenso wird ein Takt zur Bewegung der Transportvorrichtung 16 über einen zweiten Exzenternocken 34 auf einen durch Federkraft an der Exzenternocken-Mantelfläche 34a anliegenden zweiten Stößel 36 übertragen. In dem zweiten Stößel 36 ist der kurze Schenkel 38a eines L-förmigen Hebels 38 drehbar gelagert, dessen langer Schenkel 38b eine Verschiebebewegung der Baugruppe 22 bei Auf- und Abbewegung des zweiten Stößels 36 bewirkt. Die Baugruppe 22 oder ein mit ihr drehfest verbundenes Bauteil umfasst einen Zahnteilkreis, welcher während der Verschiebebewegung auf einer Zahnstange abwälzt, so dass die Baugruppe 22 eine kombinierte Verschiebe- und Drehbewegung ausführt. Dies erlaubt die Überwindung großer Strecken zwischen Halteeinrichtung-Aufnahmestellung und Halteeinrichtung-Abgabestellung. Die Kinematik der Baugruppe 22 beim Übergang von der Halteeinrichtung-Aufnahmestellung zur Halteeinrichtung-Abgabestellung und umgekehrt ist in der DE 197 55 166 A1, deren Offenbarung Teil der vorliegenden Anmeldung sein soll, ausführlich beschrieben.

Vom ersten Stößel 32 wird über eine Tellermutter 40 Bewegung auf ein erstes Lenkersystem 42 übertragen. Vom ersten Lenkersystem 42 wird über ein zweites Lenkersystem 44 die Bewegung zum Schweißelektrodenarm 28 übertragen.

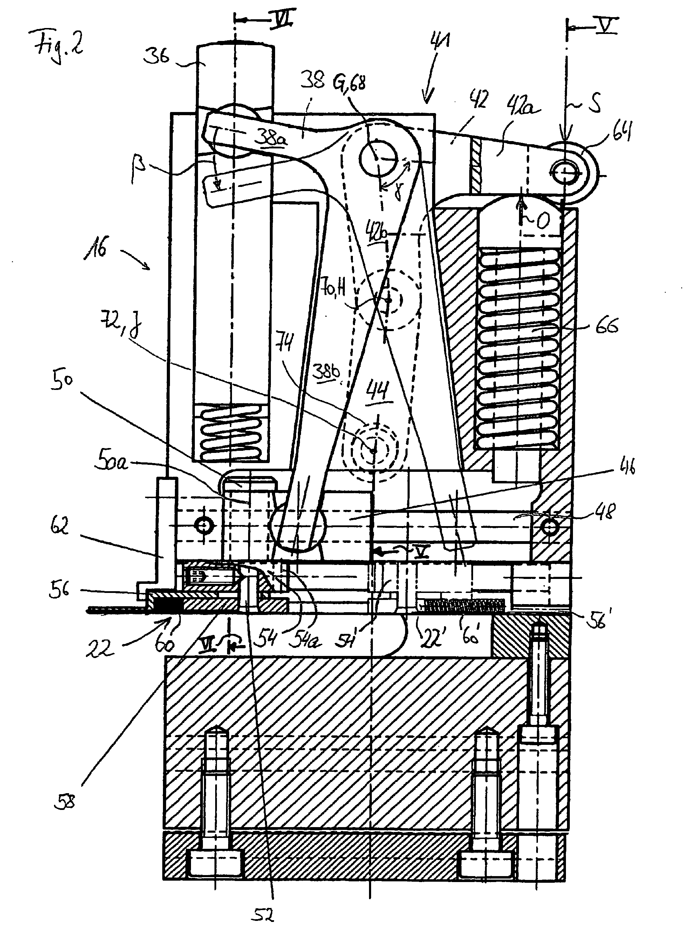

Eine genauere Beschreibung ist der Fig. 2 zu entnehmen. Zunächst wird jedoch die Transportvorrichtung 16 zur Beschickung der Schweißvorrichtung 18 mit zu fügenden Bauteilen (Fügeteilen) beschrieben.

Ein Längsende des langen Schenkels 38b des L-förmigen Hebels 38 ist drehbar in einem Verschiebeelement 46 aufgenommen, welches längs einer parallel zur Zeichenebene der Fig. 2 angeordneten Führungsstange 48 verschieblich angeordnet ist. Über einen Verbindungsbolzen 50 und einen Verbindungsniet 52, welcher drehfest mit dem drehbar im Verschiebeelement 46 gelagerten Verbindungsbolzen 50 verbunden ist, sind die Baugruppe 22 und ein Abwälzteil 54 mit dem Verschiebeelement 46 verbunden. Die Baugruppe 22, umfassend die Halteeinrichtung 56 sowie die Löseeinrichtung 58, und das Abwälzteil 54 sind zur gemeinsamen Bewegung miteinander verbunden.

In Fig. 2 ist die Baugruppe 22, das Abwälzteil 54 und das Verschiebeelement 46 in ausgezogenen Linien am linken Rand der Transportvorrichtung 16 in der Halteeinrichtung-Abgabestellung dargestellt. Dagegen ist die Halteeinrichtung 56' bzw. die Baugruppe 22' zusammen mit dem Abwälzteil 54' strichliniert in der Halteeinrichtung-Aufnahmestellung gezeigt, in welcher von der Halteeinrichtung 56 ein Fügeteil zum Transport in die Halteeinrichtung-Abgabestellung aufgenommen wird.

Zur Überwindung größerer Abstände erfolgt der Übergang von der Halteeinrichtung-Abgabestellung in die Halteeinrichtung-Aufnahmestellung und umgekehrt wie folgt:

Ausgehend von der in Fig. 2 mit durchgezogenen Linien dargestellten Halteeinrichtung-Abgabestellung wird durch Niederdrücken des Stößels 36 der L-förmige Hebel um einen Winkel β gegen den Uhrzeigersinn verdreht. Von dem Längsende des langen Schenkels 38b wird das Verschiebeelement 46 längs der Führungsstange 48 nach rechts mitgenommen. Das Abwälzteil 54, an dessen von der Halteeinrichtung 56 wegweisendem Längsende 54a ein Verzahnungsteilkreis ausgebildet ist, wird zunächst linear nach rechts verschoben, bis die Verzahnung in Eingriff mit einer in Fig. 2 nicht dargestellten Zahnstange gelangt. Ab Herstellung des Verzahnungseingriffs erfolgt eine Verschiebebewegung der Baugruppe 22 und des Abwälzteils 54 zusammen mit dem Verschiebeelement 46, der eine Schwenkbewegung um 180° um die zentrale Achse 50a des Verbindungsbolzens 50 herum überlagert ist. Nach der Drehung um 180° gelangt die Verzahnung am Abwälzteil 54 außer Eingriff mit der Zahnstange, woraufhin die Halteeinrichtung 56 und mit dieser die Löseeinrichtung 58, das Abwälzteil 54 und das Verschiebeelement 46 eine lineare Bewegung in die Halteeinrichtung-Aufnahmestellung ausführen. Die Transportbewegung des Bauteils, d. h. die Bewegung der Halteeinrichtung 56 von der Halteeinrichtung-Aufnahmestellung in die Halteeinrichtung-Abgabestellung folgt dem Ablauf in umgekehrter Reihenfolge.

Wie in Fig. 2 gezeigt ist, umfasst die Baugruppe 22 weiterhin Vorspann-Druckfedern 60, welche die Halteeinrichtung 56 bezüglich der Löseeinrichtung 58 in eine Stellung vorspannen, in welcher die Löseeinrichtung 58 bezüglich der Halteeinrichtung 56 zurückgezogen ist.

Auf der in Fig. 2 linken Seite der Transportvorrichtung 16 ist darüber hinaus ein Sicherheitsanschlag 62 vorgesehen, welcher eine vorteilhafte Weiterbildung der erfindungsgemäßen Transportvorrichtung darstellt. Der Sicherheitsanschlag 62 verhindert dann, wenn die Halteeinrichtung 56 aus irgendeinem Grunde eine Positionierausbildung an der beweglichen Schweißelektrode 26 verfehlt, dass die Halteeinrichtung 56 in den Schweißspalt zwischen die Schweißelektroden 24 und 26 gerät.

Weiterhin ist in Fig. 2 ein Hebelmechanismus 41 zum Anheben und Absenken des Schweißelektrodenarms 28 dargestellt. Der Schweißelektrodenarm 28 selbst ist in Fig. 2 nicht gezeigt. Wie aus Fig. 1 hervorgeht, wirkt durch die Tellermutter 40 eine Schließkraft S auf eine Rolle 64, welche drehbar an einem ersten Schenkel 42a des ersten Lenkersystems 42 angeordnet ist. Auf den ersten Schenkel 42a wirkt darüber hinaus die Öffnungskraft O in entgegengesetzter Richtung ein. Die Öffnungskraft O wird erzeugt durch Vorspannung der Schweißspalt-Öffnungsdruckfeder 66. Die Schweißspalt-Öffnungsdruckfeder 66 ist in ihrer Federhärte derart gewählt, dass sie den Schweißelektrodenarm 28 heben kann, jedoch durch den ersten Exzenternocken 30 zusammendrückbar ist.

Das erste Lenkersystem ist um eine ortsfeste bzw. Transportvorrichtungsgestellfeste Gestell-Drehachse G drehbar an einem fixen Anlenkort 68 am Vorrichtungsgestell angelenkt.

Am Längsende eines zweiten Schenkels 42b, welcher einen Winkel mit dem ersten Schenkel 42a einschließt, ist an einem ersten Anlenkort 70 um eine erste Drehachse H drehbar das zweite Lenkersystem 44 angelenkt.

An dem dem ersten Anlenkort 70 gegenüberliegenden Längsende des zweiten Lenkersystems 44 ist an einem zweiten Anlenkort 72 das zweite Lenkersystem 44um eine zweite Drehachse J drehbar mit der in Fig. 2 nicht dargestellten beweglichen Elektrode 62 verbunden. Am zweiten Anlenkort 72 ist im zweiten Lenkersystem 44 ein Langloch 74 ausgebildet, auf welches weiter unten erläuternd eingegangen wird. Alternativ kann das Langloch 74 auch am Schweißelektrodenarm 28 ausgebildet sein, an welchem das zweite Lenkersystem 44 am zweiten Anlenkort 72 unmittelbar angelenkt ist.

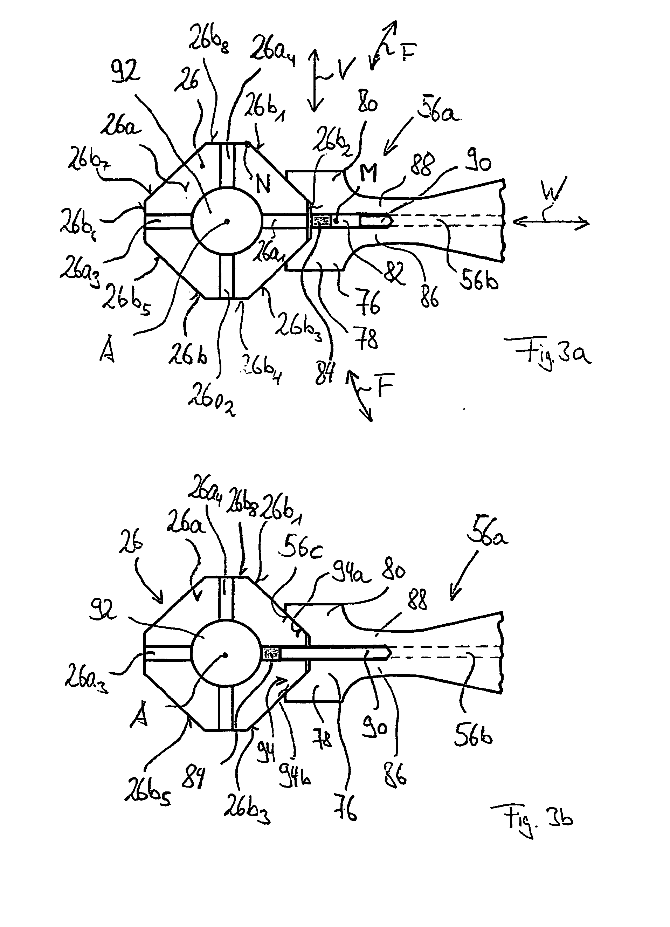

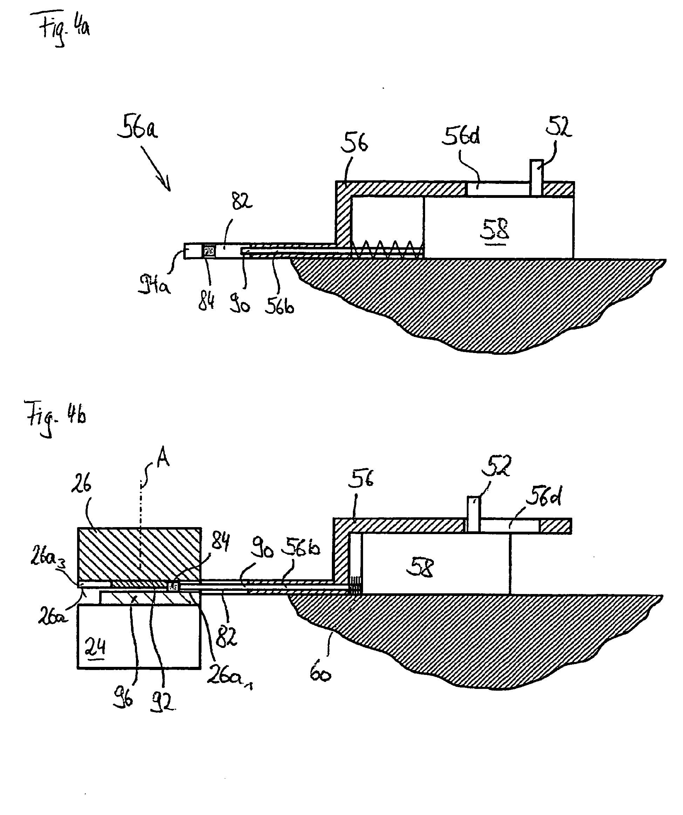

Als Nächstes werden die Figuren 3a bis 4b beschrieben werden, wobei die Figuren 3a und 4a sowie 3b und 4b jeweils paarweise zusammen betrachtet werden sollen. In Fig. 3a ist zunächst die parallel zur Zeichenebene der Fig. 3a liegende Elektrodenwirkfläche 26a der beweglichen Schweißelektrode 26 gezeigt. Die Außenumfangsfläche 26b der beweglichen Schweißelektrode 26 weist eine Mehrzahl von ebenen Gegen-Flächenbereichen 26b₁ bis 26b₈ auf. Eine zur Zeichenebene der Fig. 3a sowie zur Elektrodenwirkfläche 26a im Wesentlichen orthogonale Längsachse der Schweißelektrode 26 ist mit A bezeichnet. Die ebenen Gegen-Flächenbereiche 26b₁ bis 26b₈ sind parallel zur Schweißelektrodenlängsachse A. Weiterhin ist jeder Gegen-Flächenbereich 26bₓ (x = 1-8) bezüglich seines jeweils benachbarten Gegen-Flächenbereichs 26bₓ₋₁ oder 26bₓ₊₁ um einen vorbestimmten Winkel um eine zur Längsachse A parallele Neigeachse N geneigt angeordnet. Die ebenen Gegen-Flächenbereiche 26b₁ und 26b₅ sowie 26b₃ und 26b₇ sind zueinander parallel und im Abstand einer Schlüsselweite voneinander angeordnet. Als Schlüsselweite kann dabei jedes gängige metrische, zöllige oder sonstige Schlüsselmaß dienen. Dadurch kann die Schweißelektrode 26 durch Schlüsselangriff an paarweise einander gegenüberliegenden ebenen Gegen-Flächenbereichen an den Schweißelektrodenarm 28 durch Einschieben oder Eindrehen montiert bzw. entfernt werden.

Gleichzeitig dienen in Fig. 3a die ebenen Gegen-Flächenbereiche 26b₁ und 26b₃ als Positionierausbildung, um das Längsende 56a der Halteeinrichtung 56 bezüglich der mit V bezeichneten Raumrichtung zu positionieren. Die Raumrichtung V liegt dabei orthogonal zu der Neigeachse N.

Das Längsende 56a der Halteeinrichtung 56 ist als Greiferabschnitt 76 ausgebildet, wobei zwei Greiferklauen 78 und 80 einander mit Abstand in Richtung V voneinander entfernt angeordnet sind. Zwischen sich definieren die Greiferklauen 78 und 80 ein Klauenmaul 82. Das Klauenmaul 82 bildet den Krafteinflussbereich der Greiferanordnung 76, in welchen ein Bauteil 84 geklemmt ist. Die Haltekraft zum Halten des Bauteils 84 wird durch Federkraft der Greiferklauen 78 und 80 bereitgestellt. Diese Federkraft wird konstruktiv dadurch erzeugt, dass der Abstand der Greiferklauen 78 und 80 voneinander in Richtung des Doppelpfeils V im unbelasteten Zustand, d.h. wenn kein Bauteil geklemmt ist, zumindest in einem Abschnitt des Klauenmauls geringfügig geringer ist als eine dort zu klemmende Breite des Bauteils 84. Die Greiferklauen weisen jeweils einen Abschnitt 86 bzw. 88 auf, in welchem sich die Greiferklaue in Richtung vom Klauenmaul weg verjüngt. Durch diese Verjüngung können die Greiferklauen 78 und 80 in einer zur Zeichenebene der Figur 3a parallelen Ebene, die gleichzeitig die Haupterstreckungsebene des Greiferabschnitts 76 ist, in Richtung der Pfeile F aufeinander zu und voneinander weg federn.

In Fig. 3a ist überdies ein als zylindrischer Stab ausgebildeter Schieber 90 in seiner bezüglich der Halteeinrichtung 56 zurückgezogenen Stellung zu sehen. Der Schieber 90 ist in einem Abschnitt in einen zylindrischen Führungskanal 56b zur Relativbewegung mit der Halteeinrichtung geführt. Durch die so gebildete Führung sind Halteeinrichtung 56 und Schieber 90 in Richtung des Doppelpfeils W relativ zueinander beweglich.

Es ist weiter anzumerken, dass in der Elektrodenwirkfläche 26a Vertiefungen 26a₁ bis 26a₄ ausgebildet sind. Die Vertiefungen 26a₁ bis 26a₄ entsprechen in ihrer Querschnittskontur der Kontur des von den jeweiligen Vertiefungen aufzunehmenen Abschnitts des Bauteils 84. Die Vertiefungen 26a₁ bis 26a₄ verlaufen von der Außenumfangsfläche 26b, genauer von den Gegen-Flächenabschnitten 26b₂, 26b₄, 26b₆ und 26b₈ ausgehend radial nach innen auf die Längsachse A der beweglichen Schweißelektrode 26 zu.

Nach radial innen begrenzt werden die Vertiefungen 26a₁ bis 26a₄ durch einen Anschlagblock 92 in Form eines Anschlagstifts 92. Der Anschlagstift 92 ist in einer Öffnung in der Elektrodenwirkfläche 26a angeordnet.

Es bleibt anzumerken, dass die ebenen Gegen-Flächenbereiche 26b₁ und 26b₃ im dargestellten Beispiel eine Positionierung der Halteeinrichtung 56 derart erreichen, dass das Klauenmaul 82 mit der Vertiefung 26a₁ fluchtet, so dass das im Klauenmaul 82 gegriffene Bauteil 84 durch den Schieber 90 aufgrund einer Relativbewegung zwischen Halteeinrichtung 56 und Schieber 90 in die Vertiefung 26a₁ eingeschoben werden kann.

In Fig. 3a und 4a befindet sich das Bauteil 84 in der Bauteil-Abgabeposition, die Halteeinrichtung befindet sich in der Halteeinrichtung-Abgabestellung. In Fig. 4a ist der Übersichtlichkeit halber die Schweißelektrode 26 weggelassen.

In Fig. 3b ist, wie schon in Fig. 3a, zu sehen, dass eine an der zur Schweißelektrode 26 hinweisenden Stirnseite 56c ausgebildete Positioniergeometrie 94 mit der Positionierausbildung 26b₁ und 26b₃ zusammenwirkt. Die Positioniergeometrie an der Halteeinrichtung 56 umfasst die ebenen Anlageflächenbereiche 94a und 94b, welche zur Längsachse A der beweglichen Schweißelektrode 26 parallel angeordnet und um eine zur Längsachse A parallele Neigeachse M zueinander geneigt orientiert sind. Der ebene Anlageflächenbereich 94a liegt dabei am ebenen Gegen-Flächenbereich 26b₁ der Außenumfangsfläche 26b der Schweißelektrode 26 an, der Anlageflächenbereich 94b am Gegen-Flächenbereich 26b₃ der Schweißelektrode 26. Der Neigungswinkel zwischen den Flächenbereichen 94a und 94b ist im Zustand, in dem kein Anlageeingriff zwischen der Positioniergeometrie 94 und der Außenumfangsfläche 26b herrscht, derart geringer gewählt als der Winkel, der von den als Positionierausbildung dienenden Gegen-Flächenbereichen 26b₁ und 26b₃ eingeschlossen wird, dass nach Herstellen eines Anlageeingrifffs zwischen Positioniergeometrie 94 und Positionierausbildung 26b₁ 26b₃ eine Spreizung des Klauenmauls stattfindet. Bei dieser Spreizung wird der Abstand der Greiferklauen 78 und 80 in Richtung V voneinander vergrößert, so dass die auf das Bauteil 84 einwirkende Haltekraft abnimmt. Der Stößel 90 kann dann mit geringer Kraft das Bauteil 84 in die Vertiefungsausnehmung 26a₁ in der Elektrodenwirkfläche 26a bis zum Anschlag an den Anschlagblock 92 einschieben.

Ergänzend dazu wird mit Bezug auf Figuren 4a und 4b auf die Wirkung der Vorspann-Druckfeder hingewiesen, die die Halteeinrichtung 56 und die Löseeinrichtung 58 derart mit Kraft beaufschlagt, dass der Schieber 90 in seine zurückgezogene Stellung (siehe Fig. 4a) vorgespannt ist. Die Halteeinrichtung 56 weist ein Langloch 56d auf, welches eine Verschiebung der Halteeinrichtung 56 bezüglich der Löseeinrichtung 58 gestattet, wie aus den Fig. 4a und 4b zu erkennen ist.

In Fig. 4b ist zusätzlich ein Trägerobjekt 96 dargestellt, auf welches das Bauteil 84 aufgeschweißt werden soll. Das Trägerobjekt 96 liegt auf der ortsfesten Schweißelektrode 24 auf, so dass der Schweißstrom von der Elektrode 26 über das Bauteil 84 und das Trägerobjekt 96 schließlich zur ortsfesten Elektrode 24 fließen kann.

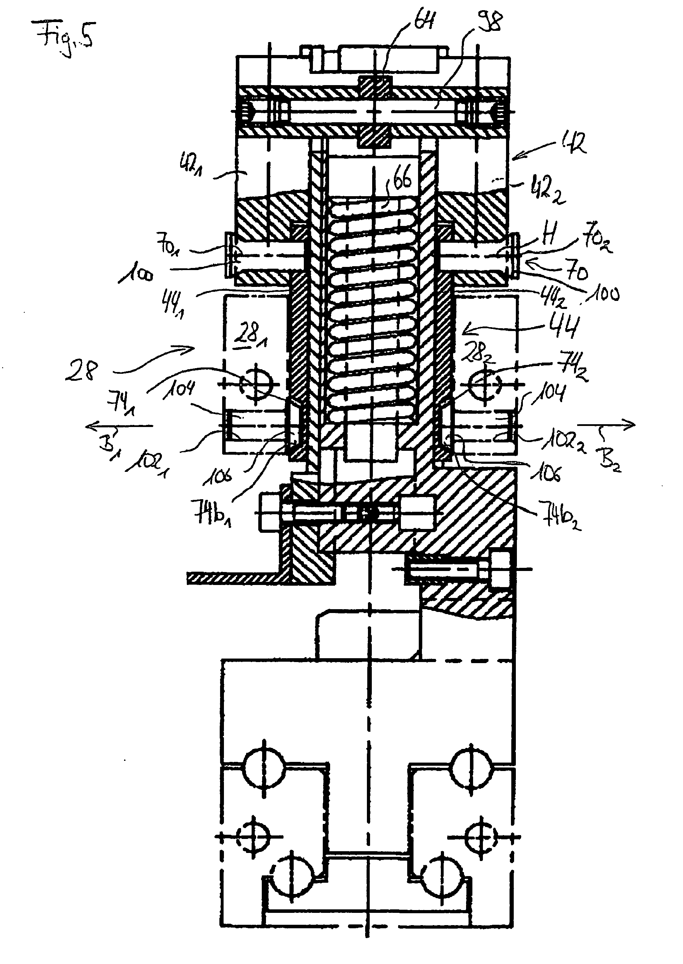

In Fig. 5 ist ein Schnitt entlang der Linie V-V in Fig. 2 dargestellt. In Fig. 5 ist sowohl die Schweißspalt-Öffnungsdruckfeder 66 und ihr Federwiderlager als auch das erste und zweite Lenkersystem 42 bzw. 44 geschnitten dargestellt.

Das erste Lenkersystem 42 besteht aus zwei Lenkern 42₁ und 42₂, welche über eine gemeinsame Traverse 98 miteinander verbunden sind. An der Traverse 98 ist drehbar die Rolle 64 abgestützt.

Am Anbringungsort 70 sind die Lenker 42₁ und 42₂ des ersten Lenkersystems 42 um die erste Drehachse H drehbar mit dem zweiten Lenkersystem 44 verbunden.

Das zweite Lenkersystem 44 umfasst ebenfalls einen ersten Lenker 44₁ und einen zweiten Lenker 44₂. Dabei ist der erste Lenker 44₁ des zweiten Lenkersystems an den Lenker 42₁ des ersten Lenkersystems 42 angelenkt, weiterhin ist der zweite Lenker 44₂ des zweiten Lenkersystems an den Lenker 42₂ des ersten Lenkersystems 42 angelenkt. Durch die starre Kopplung der Lenker 42₁ und 42₂ mit der gemeinsamen Traverse 98 weisen beide erste Anlenkstellen 70₁ und 70₂ eine gemeinsame erste Drehachse H auf. Die Anlenkung des zweiten Lenkersystsems 44 am ersten Lenkersystem 42 erfolgt durch Bolzen 100, welche eine Relativdrehung zwischen erstem und zweitem Lenkersystem gestatten.

Der Schweißelektrodenarm 28 ist in dem hier dargestellten Beispiel gebildet durch zwei im Wesentlichen parallel zueinander verlaufende Träger 28₁ und 28₂, welche mit einer gemeinsamen, nicht dargestellten Drehwelle verbunden sind und ohne die Möglichkeit einer Relativdrehung zueinander um die Elektroden-Drehachse E drehen. In Durchgangsöffnungen 102₁ und 102₂ in den Trägern 28₁ und 28₂ sind die Schäfte von Kegelkopfnieten 104 aufgenommen. Der Kegelkopf 106 der Kegelkopfniete 104 weist einen kegelstumpfförmigen Kopf auf, welcher sich in das Langloch 74 des zweiten Lenkersystems 44 hineinerstreckt. Die Langlöcher sind ebenfalls mit tiefgestellten Zahlen gekennzeichnet, um die Zuordnung zu den jeweiligen Lenkern des zweiten Lenkersystems 44 zu kennzeichnen. Die Langlöcher 74₁ und 74₂ des zweiten Lenkersystems 44 weisen entsprechend dem Kegelöffnungswinkel des Kegelkopfes 106 geneigte Seitenflächen 74b₁ und 74b₂ auf, an denen die Mantelfläche des Kegelkopfes 106 anliegt. Durch diese konstruktive Gestaltung wird erreicht, dass dann, wenn die Träger 28₁ und 28₂ des Schwenkarms 28 über die Kegelköpfe 106 an den geneigten Seitenflächen 74b₁ und 74b₂ der Langlöcher 74 anliegen, nicht nur eine Kraft in Bewegungsrichtung der Schweißelektrode 26, sondern auch eine Kraft in Richtung der Pfeile B₁ und B₂ auf die jeweiligen Träger 28₁ und 28₂ übertragen wird, so dass die Träger 28₁ und 28₂ unter der Krafteinwirkung voneinander weggedrückt und verspannt werden, was ein im Wesentlichen spielfreies Verlagern der Träger gestattet. Dies gestattet eine sehr genaue Positionierung der Schweißelektrode.

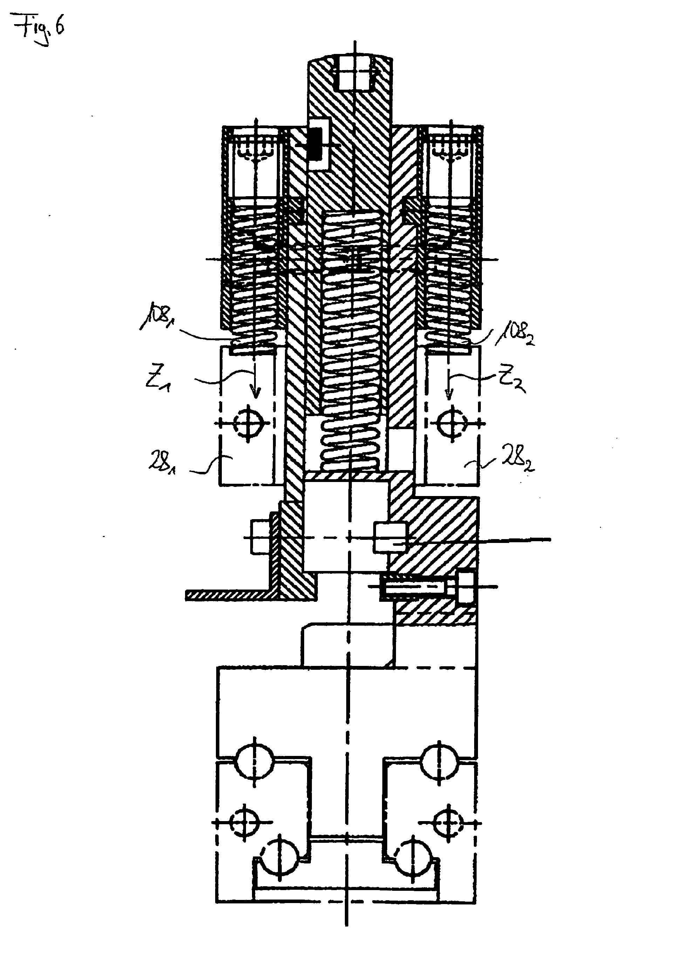

In Fig. 6 ist ein Schnitt entlang der Linie VI-VI in Fig. 2 dargestellt. Dabei interessiert im Wesentlichen lediglich die Kraftbeaufschlagung der Träger 28₁ und 28₂ durch Schweißspalt-Schließdruckfedern 108₁ und 108₂. Von diesen Schweißspalt-Schließdruckfedern 108₁ und 108₂ übt jede eine Kraft Z₁ bzw. Z₂ auf den ihr jeweils zugeordneten Träger 28₁ bzw. 28₂ aus, was eine definierte Schließkraft in der schweißbereiten Stellung der Schweißvorrichtung gewährleistet.

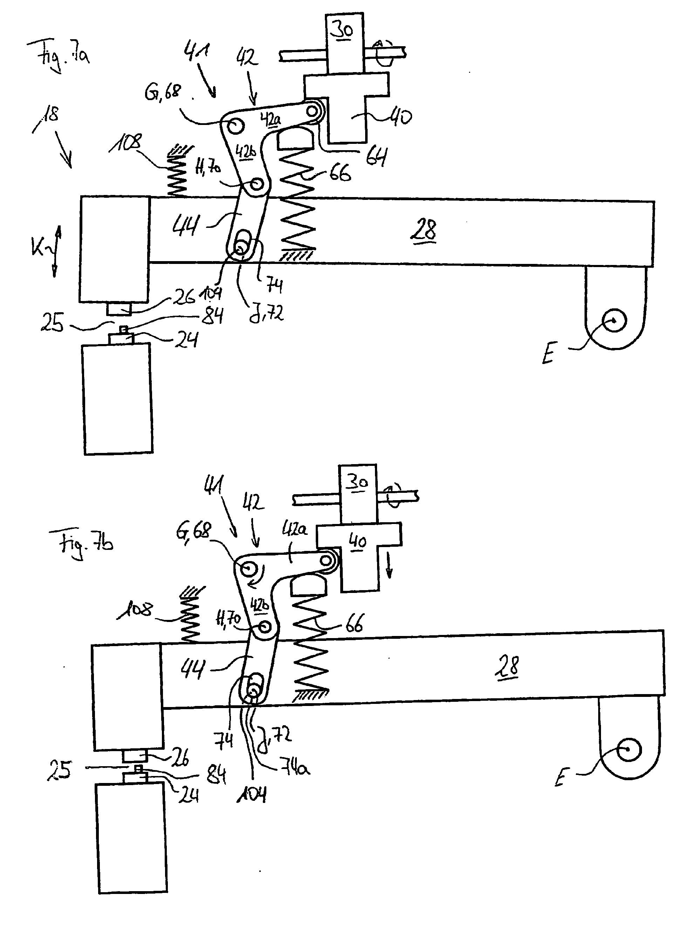

In den Figuren 7a bis 7d ist schematisch vereinfacht der Bewegungsablauf des Hebelmechanismus 41, der Elektroden 24 und 26 sowie damit verbundener Teile dargestellt. Die Bewegung des Hebelmechanismus 41 und des Schwenkarms 28 ist in den Figuren 7a bis 7d zur besseren Wahrnehmung überzeichnet dargestellt.

In Fig. 7a ist die Schweißvorrichtung 18 geöffnet, d.h. mit großer Schweißspaltweite dargestellt. Im Schweißspalt 25 ist ein Bauteil 84 angeordnet.

Durch Drehung des ersten Exzenternockens 30 wird nun der erste Schenkel 42a des ersten Lenkersystems 42 gegen die Vorspannkraft der Schweißspalt-Öffnungsdruckfeder 66 in Fig. 7b nach unten gedrückt, was zu einer Drehung des ersten Lenkersystems 42 um die Gestell-Drehachse G im Uhrzeigersinn führt. Der erste Anlenkort 70 schwenkt ebenfalls im Uhrzeigersinn um die Gestell-Drehachse G, was unter der Einwirkung der Schweißspalt-Schließdruckfeder 108 zu einer Streckung des Hebelmechanismus 41 führt (siehe Fig. 7b). Die Druckkraft der Schweißspalt-Schließdruckfeder 108 führt dazu, dass der Kegelkopfniet 104 am Langlochgrund 74a anliegt.

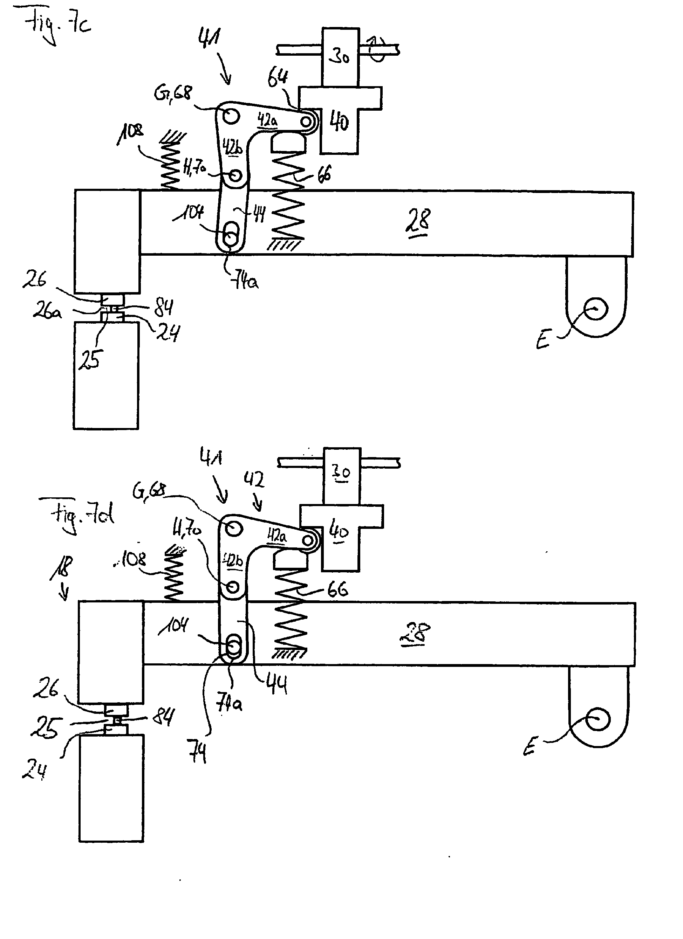

In Fig. 7c ist eine Stellung erreicht, bei der die Elektrodenwirkfläche 26a auf dem Bauteil 84 aufliegt, so dass ein weiteres Schließen des Schweißspalts 25 durch das Bauteil 84 mechanisch gehemmt ist. Die Schweißspalt-Schließdruckfeder 108 sorgt immer noch für ein Anliegen des Kegelkopfniets 104 am Langlochgrund 74a.

In Fig. 7d ist die Schweißvorrichtung 18 in einer vollständig schweißbereiten Stellung gezeigt. Der Hebelmechanismus 41 befindet sich in gestrecktem Zustand, was aufgrund der Bewegungshemmung in Schließrichtung des Schweißelektrodenarms 28 durch das Bauteil 84 bewirkt, dass der Kegelkopfniet 104 nicht mehr am Langlochgrund 74a aufliegt und in Bewegungsrichtung der Elektrode 26 vom Hebelmechanismus 41 keine Kraft auf den Schweißelektrodenarm 28 übertragen werden kann. Da die Kraft der Schweißspalt-Öffnungsdruckfeder 66 durch den ersten Exzenternocken 30 und die Tellermutter 40 überwunden ist, bestimmt alleine die Schweißspalt-Schließdruckfeder 108 die auf das Bauteil 84 durch die bewegliche Elektrode 26 ausgeübte Kraft. Diese Gestaltung der vollständig schweißbereiten Stellung hat den weiteren Vorteil, dass ein reibungsarmes Setzen des Schweißelektrodenarms 28 beim Schweißen möglich ist. Ist nämlich das Bauteil 84 mit Schweißwarzen versehen, welche während eines Schweißvorgangs abschmelzen sollen, so ist aufgrund des zwischen dem Kegelkopfniet 104 und dem Langlochgrund 74a vorhandenen Spiels ein Setzen des Schweißelektrodenarms 28 möglich, so dass der Kontakt zwischen der Schweißelektrode 26 und dem Bauteil 84 nicht abreißt. Dies ermöglicht einen bis zum Ende des Schweißvorgangs definierten Kontaktübergang.

Wenn in der vorliegenden Anmeldung eine Anordnung oder eine Anordnungsbeziehung zwischen Bauteilen mit "im Wesentlichen" beschrieben ist, so soll dies zum Ausdruck bringen, dass eine Abweichung im Rahmen der üblichen Fertigungstoleranzen zugelassen sein soll.

## Patentansprüche

1. Transportvorrichtung (16) zum Transport eines Bauteils (84) zu einer Bauteil-Abgabeposition sowie zur Abgabe des Bauteils (84) dort, insbesondere zur Bestückung einer Fügestelle einer Fügeeinrichtung (18), vorzugsweise einer Schweißeinrichtung (18), mit einem Fügeteil (84), wobei die Transportvorrichtung (16) eine Halteeinrichtung (56) aufweist, welche während eines Bauteil-Transportvorgangs in einem Krafteinflussbereich (82) eine Haltekraft auf das zu transportierende Bauteil (84) ausübt und welche beweglich ist zwischen einer Halteeinrichtung-Aufnahmestellung, in der sie ein Bauteil (84) zum Transport aufnimmt, und einer Halteeinrichtung-Abgabestellung, in der sich das zu transportierende Bauteil (84) in der Bauteil-Abgabeposition befindet, wobei die Transportvorrichtung (16) zum Lösen des Bauteils (84) aus dem Krafteinflussbereich (82) der Halteeinrichtung (56) in der Halteeinrichtung-Abgabestellung eine von der Halteeinrichtung gesonderte Löseeinrichtung (58) aufweist, wobei Halteeinrichtung (56) und Löseeinrichtung (58) derart relativ zueinander beweglich angeordnet sind, dass das Bauteil (84) bezüglich der Halteeinrichtung (56) durch eine Relativbewegung von Halteeinrichtung (56) und Löseeinrichtung (58) zum Entfernen aus dem Krafteinflussbereich (82) verlagerbar ist, **dadurch gekennzeichnet, dass** die Halteeinrichtung (56) einen Greiferabschnitt (76) mit wenigstens zwei einander mit Abstand gegenüberliegenden Klauen (78, 80) umfasst, welche in einem zwischen sich gebildeten Klauenmaul (82) den Krafteinflussbereich (82) der Halteeinrichtung (56) definieren.

2. Transportvorrichtung nach Anspruch 1,
**dadurch gekennzeichnet, dass** das Bauteil (84) durch die Relativbewegung zwischen Halteeinrichtung (56) und Löseeinrichtung (58) von der Bauteil-Abgabeposition zu einer von der Bauteil-Abgabeposition verschiedenen Bauteil-Ablageposition hin verlagerbar ist.

3. Transportvorrichtung nach Anspruch 1 oder 2,
**dadurch gekennzeichnet, dass** eine der Einrichtungen (56, 58) Halteeinrichtung (56) oder Löseeinrichtung (58), zur Relativbewegung bezüglich der jeweils anderen Einrichtung (56, 58). Löseeinrichtung (58) oder Halteeinrichtung (56), zumindest abschnittsweise, vorzugsweise nahe des Krafteinftussbereichs (82) der Halteeinrichtung (56), an der jeweils anderen Einrichtung (56, 58) geführt ist.

4. Transportvorrichtung nach einem der vorhergehenden Ansprüche,
**dadurch gekennzeichnet, dass** die Halteeinrichtung (56) eine Positioniergeometrie (94) aufweist, welche die Hafteeinrichtung (56) zumindest in der Halteeinrichtung-Abgabestellung, vorzugsweise auch in der Halteeinrichtung-Aufnahmestellung, im Zusammenwirken mit einer gesonderten Positionierausbildung (26b₁, 26b₃) bezüglich einer Verlagerung in wenigstens einer Raumrichtung (V) positioniert.

5. Transportvorrichtung nach Anspruch 4,
**dadurch gekennzeichnet, dass** sie das Bauteil (84) an eine weitere Vorrichtung (18) abgibt, wobei die Positionierausbildung (26b₁, 26b₃) an der weiteren Vorrichtung (18) ausgebildet ist.

6. Transportvorrichtung nach einem der Ansprüche 4 oder 5,
**dadurch gekennzeichnet, dass** die Positioniergeometrie (94) wenigstens zwei Anlageflächen (94a, 94b) aufweist, welche zueinander um eine in der Ebene der Anlageflächen (94a, 94b) liegende Neigeachse (M) um einen vorbestimmten Winkel geneigt angeordnet sind.

7. Transportvorrichtung nach Anspruch 6,
**dadurch gekennzeichnet, dass** die Klauen (78, 80) in Richtung (V) ihres Abstands voneinander federnd angeordnet sind.

8. Transportvorrichtung nach Anspruch 7
**dadurch gekennzeichnet, dass** die federnde Anordnung der Klauen (78, 80) durch die Klauengeometrie selbst, insbesondere durch einen sich in der Richtung von einer Öffnung des Klauenmauls (82) weg zumindest abschnittsweise verjüngenden Klauenquerschnitt (86, 88), bewirkt ist.

9. Transportvorrichtung nach Anspruch 7 oder 8
**dadurch gekennzeichnet, dass** der Abstand zwischen den wenigstens zwei Klauen (78, 80) im unbelasteten Zustand des Greiferabschnitts (76) zumindest in einem Abschnitt des Klauenmauls (82) geringer bemessen ist als die Breite eines in diesem Klauenmaulabschnitt zu greifenden Bauteilabschnitts.

10. Transportvorrichtung nach einem der vorhergehenden Ansprüche unter Rückbeziehung auf die Ansprüche 5 und 9
**dadurch gekennzeichnet, dass** die Positioniergeometrie (94) an der Öffnung des Klauenmauls (82) vorgesehen ist.

11. Transportvorrichtung nach einem der vorhergehenden Ansprüche, **dadurch gekennzeichnet, dass** die Löseeinrichtung (58) einen Schieber (90) umfasst, welcher relativ zur Halteeinrichtung (56) zwischen einer vorgeschobenen und einer zurückgezogenen Stellung beweglich ist.

12. Transportvorrichtung nach einem Anspruch 11,
**dadurch gekennzeichnet, dass** der Schieber (90) derart vorgesehen ist, dass er sich in seiner vorgeschobenen Stellung in den Krafteinflussbereich (82) der Halteeinrichtung (56) hinein erstreckt, vorzugsweise diesen durchsetzt.

13. Transportvorrichtung nach Anspruch 11 oder 12 unter Rückbeziehung auf wenigstens einen der Ansprüche 7 bis 10,
**dadurch gekennzeichnet, dass** der Schieber (90) relativ zur Halteeinrichtung (56) im Wesentlichen in Erstreckungsrichtung (W) des Klauenmauls (82) beweglich angeordnet ist.

14. Transportvorrichtung nach einem der Ansprüche 11 bis 13, unter Rückbeziehung auf Anspruch 3,
**dadurch gekennzeichnet, dass** der Schieber (90) in einem in der Halteeinrichtung (56) ausgebildeten Führungskanal (56b) geführt ist.

15. Transportvorrichtung nach einem der vorhergehenden Ansprüche,
**dadurch gekennzeichnet, dass** sie eine vormontierte oder vormontierbare Transportbaugruppe (22) umfasst, an welcher die Löseeinrichtung (58) zur gemeinsamen Bauteil-Transportbewegung mit der Halteeinrichtung (56) zwischen der Halteeinrichtung-Aufnahmestellung und der Halteeinrichtung-Abgabestellung vorgesehen ist.

16. Schweißvorrichtung (18) mit einer Transportvorrichtung (16) nach einem der vorhergehenden Ansprüche.

17. Schweißvorrichtung nach Anspruch 16, ferner umfassend:
- eine Kraftquelle (30),
- einen die Kraft der Kraftquelle (30) übertragenden Kraftübertragungsmechanismus (41), und
- wenigstens zwei einander im Wesentlichen gegenüberliegende, einen Schweißspalt (25) zwischen sich definierende Schweißelektroden (24, 26), von welchen wenigstens eine Elektrode (26) durch eine von der Kraftquelle (30) bereitgestellte Kraft mittels des Kraftübertragungsmechanismus (41) zur Veränderung der Schweißspaltweite in Richtung (K) zu der anderen Elektrode hin und von dieser weg bewegbar ist,
**dadurch gekennzeichnet, dass** die Schweißvorrichtung (18) wenigstens einen Hebelmechanismus (41) als den Kraftübertragungsmechanismus (41) umfasst, wobei der Hebelmechanismus (41) ein erstes Lenkersystem (42), welches an einem bezüglich ruhender Vorrichtungsteile fixen Anlenkort (68) um eine Gestell-Drehachse (G) drehbar ist, und
wobei der Hebelmechanismus (41) weiterhin ein zweites Lenkersystem (44) aufweist, welches an einem ersten Anlenkort (70) an dem ersten Lenkersystem (42) um eine erste Drehachse (H) drehbar angelenkt und an einem zweiten Anlenkort (72) um eine zweite Drehachse (7) drehbar mit der beweglichen Elektrode (26) verbunden ist.

18. Schweißvorrichtung nach Anspruch 17,
**dadurch gekennzeichnet, dass** das zweite Lenkersystem (44) eine Mehrzahl, vorzugsweise zwei, Lenker (44₁, 44₂) umfasst, welche im Wesentlichen eine gemeinsame erste (H) und eine gemeinsame zweite Drehachse (J) aufweisen und in Richtung der zweiten Drehachse (J) mit Abstand voneinander angeordnet sind.

19. Schweißvorrichtung nach einem der Ansprüche 17 oder 18,
**dadurch gekennzeichnet, dass** der zweite Anlenkort (72) derart ausgebildet ist, dass vom zweiten Lenkersystem (44) zur Elektrode (26) hin eine in Bewegungsrichtung (K) der Elektrode verlaufende Kraft und, zumindest zeitweise, in Richtung der zweiten Drehachse (J) verlaufende, einander entgegengesetzte Kräfte (B₁, B₂) übertragbar sind.

20. Schweißvorrichtung nach Anspruch 19
**dadurch gekennzeichnet, dass** der zweite Anlenkort (72) derart ausgebildet ist, dass auf einer Seite: lenkersystemseitig oder elektrodenseitig, ein Vorsprung (106) mit konischer Mantelfläche vorgesehen ist, welche mit einer entsprechend geneigten, vorzugsweise einer komplementär-konischen Begrenzungsfläche (74b₁, 74b₂) einer auf der jeweils anderen Seite vorgesehenen Kopplungs-Ausnehmung (74) zumindest zeitweise in Anlageeingriff steht.

21. Schweißvorrichtung nach Ansprüch 20,
**dadurch gekennzeichnet, dass** die Kopplungs-Ausnehmung (74) als Langloch (74) ausgebildet und derart angeordnet ist, dass die Längsrichtung des Langlochs (74) bei einer schweißbereiten Elektrodenstellung im Wesentlichen in Bewegungsrichtung (W) der beweglichen Elektrode (26) verläuft.

22. Schweißvorrichtung nach Anspruch 21,
**dadurch gekennzeichnet, dass** der Hebelmechanismus (41) und das Langloch (74) derart bemessen sind, dass in einem schweißbereiten Zustand der Schweißvorrichtung und in einem gestreckten Zustand der Lenkersysteme die bewegliche Elektrode (26) im Wesentlichen ohne Krafteinwirkung durch den Hebelmechanismus auf einem Fügeteil (84) in der Schweißstelle aufliegt.

23. Schweißvorrichtung nach einem der Ansprüche 17 bis 22,
**dadurch gekennzeichnet, dass** die bewegliche Elektrode (26) an einer Drehlagerstelle (bei E) um eine Elektroden-Drehachse (E) drehbar gelagert ist, wobei sie durch einen Schweißelektrodenarm (28) mit der Drehlagerstelle (bei E) verbunden ist.

24. Schweißvorrichtung nach Anspruch 23
**dadurch gekennzeichnet, dass** der Schweißelektrodenarm (28) zwei in Richtung der Elektroden-Drehachse (E) mit Abstand voneinander angeordnete Träger (28₁, 28₂) aufweist.

25. Schweißvorrichtung nach Anspruch 24 unter Rückbeziehung auf Anspruch 18,
**dadurch gekennzeichnet, dass** je ein Lenker (44₁, 44₂) des zweiten Lenkersystems (44) an je einem Träger (28₁, 28₂) um die zweite Drehachse (J) drehbar angelenkt ist.

26. Schweißvorrichtung nach einem der Ansprüche 17 bis 25,
**dadurch gekennzeichnet, dass** sie ein Kraftelement (66) aufweist, welches die bewegliche Elektrode durch die Kraftquelle überwindbar in einer der Richtungen (O): Richtung einer Schweißspaltweitenvergrößerung (O) oder einer Schweißspaltweitenverringerung (S), mit Kraft (O) beaufschlagt.

27. Schweißvorrichtung nach Anspruch 26,
**dadurch gekennzeichnet, dass** das Kraftelement (66) an einem der Lenkersysteme (42, 44), vorzugsweise am ersten Lenkersystem (42) kraftübertragend angreift.

28. Schweißvorrichtung nach Anspruch 26 oder 27,
**dadurch gekennzeichnet, dass** das erste Lenkersystem (42) wenigstens einen Winkellenker (42) mit zwei einen vorbestimmten Winkel (γ) einschließenden Schenkeln (42a, 42b) umfasst, wobei der eine Schenkel (42a) einen Krafteinleitungsbereich (bei 64) zur Einleitung von Kraft der Kraftquelle (30) sowie einen Angriffsort (bei D) des Kraftelements (66) aufweist und wobei am zweiten Schenkel (42b) der erste Anlenkort (70) zur Anlenkung des zweiten Lenkersystems (44) ausgebildet ist.

29. Schweißvorrichtung nach einem der Ansprüche 17 bis 28, vorzugsweise unter Rückbeziehung auf einen der Ansprüche 24 bis 26,
**dadurch gekennzeichnet, dass** sie ein Kraftgerät (108) umfasst, welche eine in Richtung der Schweißspaltverkleinerung wirkende Kraft (Z₁, Z₂) auf die bewegliche Elektrode (26), vorzugsweise auf den Schweißelektrodenarm (28), ausübt.

30. Schweißvorrichtung nach einem der Ansprüche 16 bis 29, unter Rückbeziehung auf Anspruch 5,
**dadurch gekennzeichnet, dass** sie eine Schweißelektrode (26) aufweist, an der die Positionierausbildung (26b₁, 26b₃) vorgesehen ist.

31. Schweißvorrichtung nach einem der Ansprüche 16 bis 30,
**dadurch gekennzeichnet, dass** sie wenigstens eine Schweißelektrode (26) aufweist, welche in einer zur Schweißstelle hinweisenden Elektrodenwirkfläche (26a) eine Fügeteil-Ausnehmung (26a₁-26a₄) zur Aufnahme eines Fügeteils (84) aufweist.

32. Schweißvorrichtung nach Anspruch 31,
**dadurch gekennzeichnet, dass** die Fügeteil-Ausnehmung (26a₁-26a₄) wenigstens eine vom Außenumfangsrand (26b) der Elektrode (26) weg verlaufende Vertiefung (26a₁-26a₄) in einer zur Schweißstelle hinweisenden Elektrodenwirkfläche (26a) ist.

33. Schweißvorrichtung nach Anspruch 32,
**dadurch gekennzeichnet, dass** die Schweißelektrode (26) eine Elektrodenachse (A) und eine Mehrzahl von Fügeteil-Ausnehmungen (26a₁-26a₄) aufweist, welche vom Außenumfangsrand (26b) der Elektrode (26) unter Annäherung an die Elektrodenachse (A) nach innen verlaufen.

34. Schweißvorrichtung nach Anspruch 32 oder 33,
**dadurch gekennzeichnet, dass** die Schweißelektrode (26) ein Anschlagmittel (92) aufweist, welches die wenigstens eine Fügeteil-Ausnehmung (26a₁-26a₄) in ihrer Verlaufsrichtung vom Außenumfangsrand (26b) weg begrenzt.

35. Schweißvorrichtung nach Anspruch 34,
**dadurch gekennzeichnet, dass** das Anschlagmittel (92) ein in einer Öffnung in der Elektrodenwirkfläche (26a) angeordneter Anschlagblock (92) ist.

## Claims

1. A conveying apparatus (16) for conveying a component (84) to a component delivery position and for delivering the component (84) thereto, in particular for supplying a joint location of a joining device (18), preferably a welding device (18), with a part to be joined (84), wherein the conveying apparatus (16) has a retaining device (56) which, during a component-conveying operation, exerts in a force-impact zone (82) a retaining force on the component (84) to be conveyed and which can move between a retaining device receiving position, in which it receives a component (84) to be conveyed, and a retaining device delivery position in which the component (84) to be conveyed is situated in a component delivery position, wherein to release the component (84) from the force-impact zone (82) of the retaining device (56) in the retaining device delivery position the conveying apparatus (16) has a release device (58) separate from the retaining device, wherein the retaining device (56) and the release device (58) are arranged to be mobile relative to one another so that the component (84) can be displaced with respect to the retaining device (56) by a relative movement of the retaining device (56) and the release device (58) for removal from the force-impact zone (82), **characterised in that** the retaining device (56) comprises a gripper portion (76) with at least two claws (78,80) which are situated opposite and spaced apart from one another and which in a claw jaw (82) formed between them define the force-impact zone (82) of the retaining device (56).

2. A conveying apparatus according to Claim 1,
**characterised in that** as a result of the relative movement between the retaining device (56) and the release device (58) the component (84) can be displaced from the component-delivery position to a component-depositing position different from the component-delivery position different.

3. A conveying apparatus according to Claim 1 or 2,
**characterised in that** one of the devices (56,58), retaining device (56) or release device (58), is guided for relative movement with respect to the respective other device (56,58), release device (58) or retaining device (56), at least in stages, preferably close to the force-impact zone (82) of the retaining device (56), on the respective other device (56,58).

4. A conveying apparatus according to any one of the preceding Claims,
**characterised in that** the retaining device (56) has a positioning geometry (94) which positions the retaining device (56) at least in the retaining device delivery position, preferably also in the retaining device receiving position, in co-operation with a separate positioning formation (26b₁, 26b₃), with respect to a displacement in at least one spatial direction (V).

5. A conveying apparatus according to Claim 4,
**characterised in that** the it delivers the component (84) to a further device (18), wherein the positioning formation (26b₁, 26b₃) is formed on the further device (18).

6. A conveying apparatus according to either Claim 4 or 5,
**characterised in that** the positioning geometry (94) has at least two abutment surfaces (94a,94b) which are arranged inclined relative to one another at a predetermined angle about an axis of inclination (M) lying in the plane of the abutment surfaces (94a,94b).

7. A conveying apparatus according to Claim 6,
**characterised in that** the claws (78,80) are mounted elastically in the direction (V) of their distance apart.

8. A conveying apparatus according to Claim 7,
**characterised in that** the elastic mounting of the claws (78,80) is brought about by the claw geometry itself, in particular by a claw cross-section (86,88) tapering at least in stages in a direction away from the opening of the claw jaw (82).

9. A conveying apparatus according to Claim 7 or 8,
**characterised in that** the distance between the at least two claws (78,80) in the unloaded state of the gripper portion (86) is calculated to be smaller at least in one section of the claw jaw (82) than the width of a component portion to be gripped in this claw jaw section.

10. A conveying apparatus according to any one of the preceding Claims appended to Claims 5 and 9,
**characterised in that** the positioning geometry (94) is provided at the opening of the claw jaw (82).

11. A conveying apparatus according to any one of the preceding Claims,
**characterised in that** the release device (58) comprises a slider (90) which can move relative to the retaining device (56) between slid-forward position and slid-back position.

12. A conveying apparatus according to Claim 11,
**characterised in that** the slider (90) is provided so that in its slid-forward position it extends into the force-impact zone (82) of the retaining device (56), preferably passes through it.

13. A conveying apparatus according to Claim 11 or 12 appended to at least one of Claims 7 to 10,
**characterised in that** the slider (90) is arranged to move relative to the retaining device (56) substantially in the direction of extension (W) of the claw jaw (82).

14. A conveying apparatus according to any one of Claims 11 to 13 appended to Claim 3,
**characterised in that** the slider (90) is guided in a guide passage (56b) formed in the retaining device (56).

15. A conveying apparatus according to any one of the preceding Claims,
**characterised in that** it comprises premounted or premountable conveying assembly (22), on which the release device (58) is provided for common component-conveying movement with the retaining device (56) between the retaining device receiving position and the retaining device delivery position.

16. A welding device (18) with a conveying apparatus (16) according to any one of the preceding Claims.

17. A welding device according to Claim 16, further comprising:
- a power source (30),
- a force-transmitting mechanism (41) transmitting the force of the power source (30, and
- at least two substantially mutually opposed welding electrodes (24,26) which define a welding gap (25) between them and at least one electrode (26) of which can be moved by a force provided by the power source (30) by means of the force-transmitting mechanism (41) to vary the welding gap width in a direction (K) towards and away from the other electrode,
**characterised in that** the welding device (18) comprises at least one lever mechanism (41) as the force-transmitting mechanism (41), wherein the lever mechanism (41) has [sic] a first link system (42) which can rotate on an articulation point (68), which is fixed relative to stationary apparatus parts, about a frame axis of rotation (G), and
wherein the lever mechanism (41) also has a second link system (44) which is rotatably articulated at a first articulation point (70) on the first link system (42) about a first axis of rotation (H), and at a second articulation point (72) is connected rotatably about a second axis of rotation (7) to the movable electrode (26).

18. A welding device according to Claim 17,
**characterised in that** the second link system (44) comprises a plurality, preferably two, links (44₁, 44₂) which essentially have a common first axis of rotation (H) and a common second axis of rotation (J), and are arranged at a distance apart in the direction of the second axis of rotation (J).

19. A welding device according to either Claim 17 or 18,
**characterised in that** the second articulation point (72) is designed so that from the second link system (44) towards the electrode (26) a force extending in the movement direction (K) of the electrode can be transmitted and, at least temporarily, mutually opposing forces (B₁, B₂) extending in the direction of the second axis of rotation (J) can be transmitted.

20. A welding device according to Claim 19,
**characterised in that** the second articulation point (72) is designed so that on one side: on the link system side or electrode side, a projection (106) with a conical circumferential surface is provided, which is in at least temporarily in abutting engagement with a correspondingly inclined, preferably a complementary conical boundary surface (74b₁,74b₂) of a coupling recess (74) provided on the respective other side.

21. A welding device according to Claim 20,
**characterised in that** the coupling recess (74) is in the form of an oblong hole (74) and is arranged so that the longitudinal direction of the oblong hole (74) in an electrode position ready for welding extends essentially in the movement direction (W) of the movable electrode (26).

22. A welding device according to Claim 21,
**characterised in that** the lever mechanism (41) and the oblong hole (74) are of such dimensions that in a welding-ready state of the welding device and in an elongated state of the link system the movable electrode (26) is supported substantially without force action by the lever mechanism on a part to be joined (84) in the welding location.

23. A welding device according to any one of Claims 17 to 22,
**characterised in that** the movable electrode (26) is rotatably mounted at a pivot bearing location (at E) about a electrode axis of rotation (E), wherein it is connected by a welding electrode arm (28) to the pivot bearing location (at E).

24. A welding device according to Claim 23,
**characterised in that** the welding electrode arm (28) has two supports (28₁,28₂) arranged spaced apart in the direction of the axis of rotation (E) of the electrodes.

25. A welding device according to Claim 24 appended to Claim 18,
**characterised in that** each link (44₁,44₂) of the second link system (44) is rotatably articulated to a respective support (28₁,28₂) about the second axis of rotation (J).

26. A welding device according to any one of Claims 17 to 25,
**characterised in that** it has a force element (66) which acts with force (0) upon the movable electrode in a manner which can be overcome by the power source in one of the directions (0): direction of a welding gap width increase (0) or of a welding gap width decrease (S).

27. A welding device according to Claim 26,
**characterised in that** the force element (66) engages in a force-transmitting manner on one of the link systems (42,44), preferably on the first link system (42).

28. A welding device according to Claim 26 or 27,
**characterised in that** the first link system (42) comprises at least one angular link (42) with two arms (42a,42b) enclosing a predetermined angle ((), wherein one arm (42a) has a force-input zone (at 64) for the input of force from the power source (30), as well as an application point (at D) of the force element (66), and wherein the first articulation point (70) is formed on the second arm (42b) for the articulation of the second link system (44).

29. A welding device according to any one of Claims 17 to 28, preferably appended to any one of Claims 24 to 26,
**characterised in that** it comprises a force device (108) which exerts a force (Z₁, Z₂) acting in the direction of the welding gap decrease on to the movable electrode (26), preferably on to the welding electrode arm (28).

30. A welding device according to any one of Claims 16 to 29 appended to Claim 5,
**characterised in that** it has a welding electrode (26), on which the positioning formation (26b₁, 26b₃) is provided.

31. A welding device according to any one of Claims 16 to 30,
**characterised in that** it has at least one welding electrode (26) which in an electrode active surface (26a) facing towards the welding location has a joint part recess (26a₁, 26a₄) to receive the part to be joined (84).

32. A welding device according to Claim 31,
**characterised in that** the joint part recess (26a₁, 26a₄) is at least one depression (26a₁, 26a₄) extending away from the outer peripheral edge (26b) of the electrode (26) in an electrode active surface (26a) pointing towards the welding location.

33. A welding device according to Claim 32,
**characterised in that** the welding electrode (26) has an electrode axis (A) and a plurality of joint part recesses (26a₁-26a₄) which extend inwards from the outer peripheral edge (26b) of the electrode (26) while approaching the electrode axis (A).

34. A welding device according to Claim 32 or 33,
**characterised in that** the welding electrode (26) has an abutment means (92) which delimits the at least one joint part recess (26a₁-26a₄) in its extension direction away from the outer peripheral edge (26b).

35. A welding device according to Claim 34,
**characterised in that** the abutment means (92) is an abutment block (92) disposed in an opening in the electrode active surface (26a).

## Revendications

1. Dispositif de transport (16) pour le transport d'un élément (84) vers une position de transfert d'élément ainsi que pour le transfert de l'élément (84) à cet endroit, en particulier pour l'équipement d'un poste de jonction d'un dispositif de jonction (18), de préférence d'un dispositif de soudage (18), avec une pièce de jonction (84), dans lequel le dispositif de transport (16) présente un dispositif de maintien (56), qui exerce une force de maintien sur le composant à transporter pendant une opération de transport d'élément dans une région d'influence de force (82) et qui est mobile entre une position de réception du dispositif de maintien, dans laquelle il contient un élément (84) pour le transport, et une position de transfert du dispositif de maintien, dans laquelle l'élément à transporter (84) se trouve dans la position de transfert d'élément, dans lequel le dispositif de transport (16) présente un dispositif de libération (58) séparé du dispositif de maintien pour la libération de l'élément (84) hors de la région d'influence de force (82) du dispositif de maintien (56) dans la position de transfert du dispositif de maintien, dans lequel le dispositif de maintien (56) et le dispositif de libération (58) sont disposés de façon mobile l'un par rapport à l'autre, de telle manière que l'élément (84) soit déplaçable par rapport au dispositif de maintien (56) par un mouvement relatif du dispositif de maintien (56) et du dispositif de libération (58) pour l'enlever hors de la région d'influence de force (82), **caractérisé en ce que** le dispositif de maintien (56) comprend une partie de pince (76) avec au moins deux griffes (78, 80) opposées à distance l'une de l'autre, qui définissent dans une entrée de griffes (82) formée entre elles la région d'influence de force (82) du dispositif de maintien (56).

2. Dispositif de transport selon la revendication 1, **caractérisé en ce que** l'élément (84) est déplaçable de la position de transfert d'élément à une position de dépôt d'élément différente de la position de transfert d'élément, par le mouvement relatif entre le dispositif de maintien (56) et le dispositif de libération (58).

3. Dispositif de transport selon la revendication 1 ou 2, **caractérisé en ce qu'**un des dispositifs (56, 58), dispositif de maintien (56) ou dispositif de libération (58), est guidé au moins localement, de préférence à proximité de la région d'influence de force (82) du dispositif de maintien (56), respectivement sur l'autre dispositif (56, 58) pour le mouvement relatif par rapport à l'autre dispositif respectif (56, 58), dispositif de libération (58) ou dispositif de maintien (56).

4. Dispositif de transport selon l'une quelconque des revendications précédentes, **caractérisé en ce que** le dispositif de maintien (56) présente une géométrie de positionnement (94), qui positionne le dispositif de maintien (56) au moins dans la position de transfert du dispositif de maintien, de préférence aussi dans la position de réception du dispositif de maintien, en coopération avec une configuration de positionnement séparée (26b₁, 26b₃) par rapport à un déplacement dans au moins une direction spatiale (V).

5. Dispositif de transfert selon la revendication 4, **caractérisé en ce qu'**il transfère l'élément (84) à un autre dispositif (18), dans lequel la configuration de positionnement (26b₁, 26b₃) est formée sur l'autre dispositif (18).

6. Dispositif de transport selon l'une quelconque des revendications 4 ou 5, **caractérisé en ce que** la géométrie de positionnement (94) présente au moins deux surfaces d'appui (94a, 94b), qui sont disposées de façon inclinée l'une par rapport à l'autre d'un angle prédéterminé autour d'un axe d'inclinaison (M) situé dans le plan des surfaces d'appui (94a, 94b).

7. Dispositif de transport selon la revendication 6, **caractérisé en ce que** les griffes (78, 80) sont disposées de façon élastique dans la direction (V) de leur espacement l'une de l'autre.

8. Dispositif de transport selon la revendication 7, **caractérisé en ce que** l'agencement élastique des griffes (78, 80) est dû à la géométrie des griffes elles-mêmes, en particulier à une section transversale des griffes (86, 88) qui diminue au moins localement dans la direction s'éloignant de l'ouverture de l'entrée de griffes (82).

9. Dispositif de transport selon la revendication 7 ou 8, **caractérisé en ce que** l'espacement entre les au moins deux griffes (78, 80), dans l'état non chargé de la partie de pince (76), est de dimension plus petite, au moins dans une partie de l'entrée de griffes (82), que la largeur d'une partie d'élément à saisir dans cette partie d'entrée de griffes.

10. Dispositif de transport selon l'une quelconque des revendications précédentes en relation avec les revendications 5 et 9, **caractérisé en ce que** la géométrie de positionnement (94) est prévue à l'ouverture de l'entrée de griffes (82).

11. Dispositif de transport selon l'une quelconque des revendications précédentes, **caractérisé en ce que** le dispositif de libération (58) comprend un coulisseau (90), qui est mobile par rapport au dispositif de maintien (56) entre une position avancée et une position reculée.

12. Dispositif de transport selon la revendication 11, **caractérisé en ce que** le coulisseau (90) est prévu de telle manière que, dans sa position avancée, il s'étende dans la région d'influence de force (82) du dispositif de maintien (56), de préférence qu'il traverse celle-ci.

13. Dispositif de transport selon la revendication 11 ou 12 en relation avec au moins une des revendications 7 à 10, **caractérisé en ce que** le coulisseau (90) est disposé de façon mobile par rapport au dispositif de maintien (56), essentiellement dans la direction d'extension (W) de l'entrée de griffes (82).

14. Dispositif de transport selon l'une quelconque des revendications 11 à 13, en relation avec la revendication 3, **caractérisé en ce que** le coulisseau (90) est guidé dans un canal de guidage (56b) formé dans le dispositif de maintien (56).

15. Dispositif de transport selon l'une quelconque des revendications précédentes, **caractérisé en ce qu'**il comprend un module de transport (22) pré-monté ou pouvant être pré-monté, sur lequel le dispositif de libération (58) est prévu pour le mouvement de transport d'élément commun avec le dispositif de maintien (56) entre la position de réception du dispositif de maintien et la position de transfert du dispositif de maintien.

16. Dispositif de soudage (18) avec un dispositif de transport (16) selon l'une quelconque des revendications précédentes.

17. Dispositif de soudage selon la revendication 16, comprenant en outre
- une source de force (30),
- un mécanisme de transmission de force (41) transmettant la force de la source de force (30), et
- au moins deux électrodes de soudage (24, 26) essentiellement opposées l'une à l'autre et définissant entre elles une fente de soudage (25), dont au moins une électrode (26) est animée d'un mouvement de va et vient dans la direction (K) par rapport à l'autre électrode par une force fournie par la source de force (30) au moyen du mécanisme de transmission de force (41) pour changer la largeur de la fente de soudage,
**caractérisé en ce que** le dispositif de soudage (18) comprend au moins un mécanisme à leviers (41) comme mécanisme de transmission de force (41), dans lequel le mécanisme à leviers (41) présente un premier système de bielles (42), qui peut tourner autour d'un axe de rotation de bâti (G) en un endroit d'articulation (68) fixe par rapport à des parties du dispositif au repos, et
dans lequel le mécanisme à leviers (41) présente en outre un deuxième système de bielles (44), qui est articulé de façon rotative autour d'un premier axe de rotation (H) en un premier endroit d'articulation (70) sur le premier système de bielles (42), et est relié à l'électrode mobile (26) de façon rotative autour d'un deuxième axe de rotation (7) en un endroit d'articulation (72).

18. Dispositif de soudage selon la revendication 17, **caractérisé en ce que** le deuxième système de bielles (44) comprend une pluralité de bielles, de préférence deux (44₁, 44₂), qui présentent essentiellement un premier axe de rotation commun (H) et un deuxième axe de rotation commun (J) et qui sont disposées à distance l'une de l'autre dans la direction du deuxième axe de rotation (J).

19. Dispositif de soudage selon l'une des revendications 17 ou 18, **caractérisé en ce que** le deuxième endroit d'articulation (72) est réalisé de telle manière qu'une force opérant dans la direction de mouvement (K) de l'électrode et, au moins temporairement, des forces opposées l'une à l'autre (B₁, B₂) opérant dans la direction du deuxième axe de rotation (J), puissent être transmises du deuxième système de bielles (44) à l'électrode (26).

20. Dispositif de soudage selon la revendication 19, **caractérisé en ce que** le deuxième endroit d'articulation (72) est réalisé de telle manière qu'il soit prévu sur un côté: côté système de bielles ou côté électrode, une saillie (106) avec une surface latérale conique, qui est au moins temporairement en prise d'appui avec une surface de limitation d'inclinaison correspondante, de préférence conique complémentaire (74b₁, 74b₂) d'un évidement de couplage (74) prévu sur l'autre côté respectivement.

21. Dispositif de soudage selon la revendication 20, **caractérisé en ce que** l'évidement de couplage (74) est réalisé sous forme de trou oblong (74), et est disposé de telle manière que la direction longitudinale du trou oblong (74) s'étende dans la direction de mouvement (W) de l'électrode mobile (26) dans une position de l'électrode prête pour le soudage.

22. Dispositif de soudage selon la revendication 21, **caractérisé en ce que** le mécanisme à leviers (41) et le trou oblong (74) sont dimensionnés de telle manière que, lorsque le dispositif de soudage se trouve dans un état prêt à souder et que les systèmes de bielles se trouvent dans un état étendu, l'électrode mobile (26) repose sur une pièce de jonction (84) dans la zone de soudage essentiellement sans exercer de force par le mécanisme à leviers.

23. Dispositif de soudage selon l'une quelconque des revendications 17 à 22, **caractérisé en ce que** l'électrode mobile (26) est montée de façon rotative autour d'un axe de rotation d'électrode (E) en un point de palier de rotation (en E), dans lequel elle est reliée au point de palier de rotation (en E) par un bras d'électrode de soudage (28).

24. Dispositif de soudage selon la revendication 23, **caractérisé en ce que** le bras d'électrode de soudage (28) présente deux supports (28₁, 28₂) disposés à distance l'un de l'autre dans la direction de l'axe de rotation de l'électrode (E).

25. Dispositif de soudage selon la revendication 24 en relation avec la revendication 18, **caractérisé en ce qu'**une bielle (44₁, 44₂) du deuxième système de bielles (44) est respectivement articulée sur un support (28₁, 28₂) de façon rotative autour du deuxième axe de rotation (J).

26. Dispositif de soudage selon l'une quelconque des revendications 17 à 25, **caractérisé en ce qu'**il présente un élément de force (66), qui agit sur l'électrode mobile avec une force (O) de façon surmontable par la source de force dans une des directions (O): direction d'un agrandissement de la largeur de la fente de soudage (0) ou d'une diminution de la largeur de la fente de soudage (S).

27. Dispositif de soudage selon la revendication 26, **caractérisé en ce que** l'élément de force (66) agit avec transmission de force sur un des systèmes de bielles (42, 44), de préférence sur le premier système de bielles (42).

28. Dispositif de soudage selon la revendication 26 ou 27, **caractérisé en ce que** le premier système de bielles (42) comprend au moins une bielle coudée (42) avec deux branches (42a, 42b) formant un angle prédéterminé (γ), dans lequel une première branche (42a) présente une région d'introduction de force (en 64) pour l'introduction de force de la source de force (30) ainsi qu'un endroit d'action (en D) de l'élément de force (66) et dans lequel le premier endroit d'articulation (70) pour l'articulation du deuxième système de bielles (44) est formé sur la deuxième branche (42b).

29. Dispositif de soudage selon l'une quelconque des revendications 17 à 28, de préférence en relation avec une des revendications 24 à 26, **caractérisé en ce qu'**il comprend un appareil de force (108), qui exerce une force (Z₁, Z₂), orientée dans la direction de la diminution de la largeur de la fente de soudage, sur l'électrode mobile (26), de préférence sur le bras d'électrode de soudage (28).

30. Dispositif de soudage selon l'une quelconque des revendications 16 à 29, en relation avec la revendication 5, **caractérisé en ce qu'**il présente une électrode de soudage (26), sur laquelle est prévue la géométrie de positionnement (26b₁, 26b₃).

31. Dispositif de soudage selon l'une quelconque des revendications 16 à 30, **caractérisé en ce qu'**il présente au moins une électrode de soudage (26), qui présente, dans une face active (26a) de l'électrode tournée vers le point de soudage, un évidement de pièce de jonction (26a₁-26a₄) destiné à recevoir une pièce de jonction (84).

32. Dispositif de soudage selon la revendication 31, **caractérisé en ce que** l'évidement de pièce de jonction (26a₁-26a₄) est au moins un creux (26a₁-26a₄) s'écartant du bord périphérique extérieur (26b) de l'électrode (26) dans une face active (26a) de l'électrode tournée vers le point de soudage.

33. Dispositif de soudage selon la revendication 32, **caractérisé en ce que** l'électrode de soudage (26) présente un axe d'électrode (A) et une pluralité d'évidements de pièce de jonction (26a₁-26a₄), qui s'étendent vers l'intérieur en s'approchant de l'axe d'électrode (A) en partant du bord périphérique extérieur (26b).

34. Dispositif de soudage selon la revendication 32 ou 33, **caractérisé en ce que** l'électrode de soudage (26) présente un moyen de butée (92), qui limite ledit au moins un évidement de pièce de jonction (26a₁-26a₄) dans sa direction d'extension à partir du bord périphérique extérieur (26b).

35. Dispositif de soudage selon la revendication 34, **caractérisé en ce que** le moyen de butée (92) est un bloc de butée (92) disposé dans une ouverture dans la surface active de l'électrode (26a).
